# EUROPÄISCHE PATENTSCHRIFT

(11) **EP 4 115 779 B1**
(45) Veröffentlichungstag und Bekanntmachung des Hinweises auf die Patenterteilung: **03.09.2025**
(21) Anmeldenummer: 21183992.3
(22) Anmeldetag: 06.07.2021
(51) Int. Cl.: A47J 36/32, A47J 43/046, A47J 43/07

(54) **HAUSHALTSGERÄT MIT MULTIFUNKTIONALER ANZEIGE**
HOUSEHOLD APPLIANCE WITH MULTIFUNCTIONAL DISPLAY
APPAREIL ÉLECTROMÉNAGER COMPRENANT UN AFFICHAGE MULTIFONCTION

(43) Veröffentlichungstag der Anmeldung: 11.01.2023
(73) Patentinhaber: Vorwerk & Co. Interholding GmbH, 42275 Wuppertal (DE)
(72) Erfinder: LANG, Torsten, 42657 Solingen (DE); HAUNSCHILD, Felix, 45239 Essen (DE); MEHLHASE, Dietmar, 50733 Köln (DE)
(74) Vertreter: Bals & Vogel Patentanwälte PartGmbB

(56) Entgegenhaltungen:
- EP-A1- 3 730 011
- WO-A1-2021/071081
- DE-A1- 102014 107 163
- US-A1- 2015 119 003
- US-A1- 2020 001 463

## Beschreibung

Die Erfindung betrifft ein Haushaltsgerät sowie ein Verfahren zum Betreiben eines Haushaltsgeräts nach den jeweiligen unabhängigen Ansprüchen.

Aus dem Stand der Technik sind Haushaltsgeräte bekannt, deren Bedienung mit voranschreitender Entwicklung zunehmend komplexer wird. Daher verwenden viele Haushaltsgeräte, welche aus dem Stand der Technik bekannt sind, eine Vielzahl von Anzeigeinformationen, Anzeigen und Bedienelementen, mit denen einerseits der Benutzer über den Status des Haushaltsgerätes informiert werden, und andererseits die unterschiedlichen Funktionen des Haushaltsgerätes steuern kann. Beispielsweise offenbart WO 2021/071081 A1 eine Klimaanlage, welche die Position eines Benutzers erfasst und die Anlage entsprechend der übermittelten Position steuert.

Dabei kann es, trotz Verwendung mehrerer Displays bzw. mehrerer Bedienelemente dazu kommen, dass ein Benutzer mit der Bedienung des Haushaltsgerätes überfordert ist. Insbesondere dann, wenn der Benutzer am Haushaltsgerät eine komplexe Abfolge von Schritten ausführen muss, kann es leicht passieren, dass der Benutzer den Überblick verliert.

Darüber hinaus kann es auch bei Abläufen, welche das räumliche Vorstellungsvermögen des Benutzers voraussetzen, schwierig sein, den Benutzer bei derartigen Abläufen mithilfe von bekannten Displays leicht und übersichtlich anzuleiten. Dies kann zur Folge haben, dass der vom Haushaltsgerät vorgesehene Ablauf nicht oder nicht richtig durchgeführt wird, sodass das Ergebnis der Haushaltstätigkeit, welche mit dem Haushaltsgerät durchgeführt werden soll, nicht erreicht wird oder mangelhaft ist.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, ein Haushaltsgerät sowie ein Verfahren zum Betreiben eines Haushaltsgeräts bereitzustellen, welche das zumindest teilweise automatische Ausführen einer Haushaltstätigkeit für den Benutzer erleichtert, umso ein verbessertes Ergebnis der Haushaltstätigkeit sicher zu gewährleisten.

Die voranstehende Aufgabe wird gelöst durch ein Haushaltsgerät mit den Merkmalen des Anspruchs 1, sowie durch ein Verfahren mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Haushaltsgerät beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Haushaltsgerät, insbesondere eine Küchenmaschine zum Zubereiten von Speisen vorgesehen. Dabei weist das Haushaltsgerät eine Bearbeitungsvorrichtung zum zumindest teilweise automatischen Ausführen einer Haushaltstätigkeit auf, insbesondere zu einem Verarbeiten von Zutaten, wobei die Bearbeitungsvorrichtung durch eine Steuereinheit gesteuert wird. Außerdem weist das Haushaltsgerät eine Positionsvorrichtung zur Erfassung einer Positionsinformation eines Benutzers auf, der das Haushaltsgerät bedient, wobei die Positionsinformation an die Steuereinheit übermittelt wird. Ferner weist das Haushaltsgerät eine Anzeige auf, welche dazu ausgebildet ist, eine durch die Steuereinheit bestimmte Bildinformation, insbesondere zur Ansteuerung und/oder Bedienung des Haushaltsgeräts, wiederzugeben, wobei die durch die Anzeige wiedergegebene Bildinformation beim Benutzer einen (vorzugsweise dreidimensionalen) Tiefeneindruck erzeugt und abhängig ist von zumindest der Positionsinformation des Benutzers. Dabei können zumindest die Bearbeitungsvorrichtung, die Steuereinheit, die Positionsvorrichtung sowie die Anzeige wenigstens die erforderlichen Steuerungs-, Bild- und Positionsinformationen als (bidirektionale) Daten austauschen.

Ein Haushaltsgerät im Sinne der vorliegenden Anmeldung ist dabei jedes elektromechanische und/oder elektrische Gerät, welches üblicherweise zur Verwendung im Haushalt benutzt wird. Darunter fallen insbesondere Staubsauger, Küchengeräte (weiße Ware), sowie Waschmaschinen und Trockner. Auch sogenannte Küchenmaschinen zum Zubereiten von Mahlzeiten, Getränken oder Zwischenprodukten davon werden als Haushaltsgerät im Sinne der Anmeldung aufgefasst. Dabei kann das Haushaltsgerät zumindest teilstationär sein. Dabei kann teilstationär bedeuten, dass dieses zumindest für die Ausführung der Haushaltstätigkeit einen festen Aufstellungsort hat und/oder einen Netzanschluss aufweist, über den das Haushaltsgerät mit Energie versorgt wird.

Die Haushaltstätigkeit kann eine mechanisch-physikalische Tätigkeit sein, welche durch das Haushaltsgerät unterstützt wird, beispielsweise Staubsaugen, Spülen oder das zumindest teilautomatische Verarbeiten von Zutaten anhand eines Rezepts (mit den erforderlichen Arbeitsschritten, wie z.B. Kochen, Rühren, Zerkleinern, Wiegen etc.). Es kann sich dabei beispielsweise auch um die Anzeige von Informationen handeln, beispielsweise das Anzeigen eines Einkaufszettels, Anzeigen eines Rezepts, insbesondere mit den erforderlichen Arbeitsschritten, und/oder auch um die Aufnahme von Befehlen, beispielsweise das Setzen eines Timers, das Einschalten eines Rührwerks, der Betrieb einer Heizung usw.

Die Bearbeitungsvorrichtung ist dazu geeignet, eine Haushaltstätigkeit, insbesondere Staubsaugen, Waschen, Kochen, Spülen zumindest teilweise automatisch auszuführen bzw. die zumindest teilweise automatische Ausführung der Haushaltstätigkeit zu unterstützen. Bei einer Küchenmaschine kann die Bearbeitungsvorrichtung beispielsweise aufweisen: einen Rührer, ein Schneidmesser, einen Elektromotor zum Antreiben des Rührers bzw. eines Aufsatzes, ein Rührgefäß, eine Heizung zum Beheizen des Rührgefäßes bzw. der darin befindlichen Zutaten sowie einen Prozessor zum Koordinieren der Funktionen der genannten **Bauteile.** Die Bearbeitungsvorrichtung kann insbesondere einen Antrieb, beispielsweise einen Elektromotor, aufweisen. Dieser kann beispielsweise das Gebläse eines Staubsaugers oder den Rührer einer Küchenmaschine antreiben, wobei jeweils auch das Gebläse bzw. der Rührer als Bearbeitungsvorrichtung oder als Teil davon angesehen werden können.

Die Positionsvorrichtung ist dazu geeignet, eine Positionsinformation eines Benutzers bzw. einer Person, die das Haushaltsgerät bedient, zu bestimmen. Dies kann einerseits passiv, beispielsweise durch eine Benutzereingabe des Benutzers an der Positionsvorrichtung geschehen und/oder durch eine Erkennung eines Benutzerprofils vom Benutzer. Hierzu kann eine Eingabeschnittstelle, insbesondere als Drehknopf und/oder als Touch-Screen von der Anzeige ausgebildet, vorgesehen sein. Andererseits oder in Ergänzung dazu kann ebenfalls vorgesehen sein, dass die Positionsvorrichtung die Positionsinformation aktiv und ohne Zutun des Benutzers detektiert, beispielsweise durch einen Sensor, der die Position des Benutzers, insbesondere den Kopf und/oder die Augen des Benutzers, erfasst. Die Positionsvorrichtung kann auch dazu geeignet sein, weitere Eingaben des Benutzers, die die Steuerung des Haushaltsgerätes betreffen, wie die Auswahl eines Rezeptes, das Ein- und Ausschalten des Haushaltsgerätes etc. anzunehmen. Es kann vorgesehen sein, dass für den Benutzer im Haushaltsgerät, insbesondere in der Steuereinheit und/oder auf einem nicht flüchtigen Speichermedium, ein Benutzerprofil hinterlegt ist oder erstmalig angelegt wird. Das Benutzerprofil kann die Körpergröße des Benutzers umfassen. Weiterhin kann das Benutzerprofil auch eine Anweisung bzw. Information, insbesondere für die Steuereinheit, umfassen, ob für das Benutzerprofil die Bildinformation in einem 2D-Modus oder in einem 3D Modus wiedergegeben werden soll. Hierdurch wird die Handhabung des Haushaltsgerätes noch weiter vereinfacht, insbesondere muss der Benutzer so weniger Eingaben vornehmen.

Eine Positionsinformation kann beispielsweise der Abstand des Benutzers zum Haushaltsgerät und/oder die Körpergröße des Benutzers sein. Es kann auch vorgesehen sein, dass die Positionsinformation die Position zumindest eines Auges oder beider Augen des Benutzers im Raum oder zum Haushaltsgerät angibt. Die Positionsinformation kann absolut in Bezug auf feste Koordinatensysteme (beispielsweise als GPS-Koordinaten, gegebenenfalls zuzüglich einer Höhe über dem Meeresspiegel) und/oder in Bezug auf das Haushaltsgerät selbst angegeben sein. Insbesondere in Bezug auf das Haushaltsgerät bzw. die Anzeige kann eine Positionsinformation beispielsweise als Abstand R, Azimutwinkel φ und Höhe Z in Bezug auf das Haushaltsgerät bzw. dessen Anzeige als Koordinatenursprung gegeben sein.

Es ist auch denkbar, dass anstelle einer (konkreten) Positionsinformation des Benutzers auch eine allgemein gültige Positionsinformation für die wiedergebenden Bildinformationen durch die Anzeige verwendet werden. Damit ist es auch möglich, dass mehrere Benutzer gleichzeitig die wiedergegebenen (dargestellten) Bildinformationen (jeweils) mit einem Tiefeneindruck erkennen können.

Bei der Steuereinheit kann es sich beispielsweise um eine zentrale Recheneinheit (CPU), eine grafische Recheneinheit (GPU), einen Mikrocontroller, einen Integrierten Schaltkreis (IC), insbesondere ein Field Programmable Gate Array (FPGA), oder eine Kombination hieraus handeln, welche zur Erfassung, Speicherung und/oder Verarbeitung von Signalen sowie zur Ausgabe von Befehlen geeignet sind. Insbesondere kann die Steuereinheit, insbesondere die grafische Recheneinheit, dazu ausgebildet sein, Prozesse parallel ausführen zu können, um so die Rechenleistung zu erhöhen und eine besonders benutzerfreundliche Bedienung zu ermöglichen. Es kann ebenfalls vorgesehen sein, dass die Steuereinheit zumindest teilweise die Daten an eine externe Steuereinheit, mit der die Steuereinheit insbesondere über das Internet oder WLAN verbunden ist, abgibt bzw. austauscht.

Die Anzeige ist dazu geeignet, beim Benutzer bei der Wiedergabe einer Bildinformation einen Tiefeneindruck zu erzeugen. Dabei bedeutet Tiefeneindruck, dass der Benutzer einen räumlichen Eindruck der dargestellten Informationen erhält, der dem entspricht, wie als wenn er die dargestellte Information tatsächlich in einem vorgegebenen Abstand sehen würde. Es handelt sich also nicht lediglich um eine zweidimensionale Projektion eines dreidimensionalen Objektes. Vielmehr ist die Bildinformation, die durch die Anzeige wiedergegeben wird, dazu geeignet, beim Benutzer den Eindruck eines echten dreidimensionalen Bildes zu erzeugen, wie er es wahrnehmen würde, wenn sich die dargestellten Objekte tatsächlich vor ihm befänden. Es kann vorgesehen sein, dass die Bildinformation zumindest einen Vordergrund und einen Hintergrund aufweist, welche räumlich voneinander getrennt sind, also einen Abstand zueinander haben. Es kann vorgesehen sein, dass die Anzeige eine Touchfunktion, vorzugsweise zur Eingabe von Steuerungsinformationen, aufweist. Mit anderen Worten kann die Anzeige derart ausgebildet sein, dass sie eine Eingabe des Benutzers, insbesondere durch kapazitive Sensoren, detektieren und an die Steuereinheit weiterleiten kann. Hierdurch lässt sich das Küchengerät für den Benutzer besonders einfach und auch intuitiv steuern.

Es kann vorgesehen sein, dass die Positionsvorrichtung sowie ggf. die Steuereinheit zumindest teilweise in die Anzeige integriert ist. Dabei kann vorgesehen sein, dass einzelne Komponenten der Positionsvorrichtung bzw. die Positionsvorrichtung insgesamt in einer Ausnehmung der Anzeige (Notch) oder komplett unsichtbar in der Anzeige integriert sind. Es kann ebenfalls vorgesehen sein, dass die Positionsvorrichtung in einem Rahmen der Anzeige integriert ist. Auch kann ein Teil der Steuereinheit in der Anzeige integriert sein, um insbesondere die Kommunikation zur Steuerung zwischen der Positionsvorrichtung und der Anzeige auszuführen. Für den Benutzer bietet die kompakte Bauweise den Vorteil, dass er nicht durch die Positionsvorrichtung irritiert ist, und so eine erleichterte Bedienung ermöglicht wird.

Die Bildinformation kann sich zusammensetzen aus einem Bildinhalt, und einer Distanzinformation, welche angibt, in welcher Entfernung einzelne Bildobjekte des Bildinhalts zueinander bzw. zum Benutzer dargestellt werden sollen. So kann die Bildinformation beispielsweise eine bildliche Darstellung einer Tomate (Bildinhalt), die sich in 100 cm Entfernung zum Benutzer befindet (Distanzinformation), aufweisen. Insbesondere kann es sich bei der Bildinformation um zu erwartende Kochergebnisse bzw. Rezeptresultate oder Arbeitsschritte handeln. Dies bietet den Vorteil, dass der Benutzer leicht (anhand der räumlichen Darstellung) erkennen kann, welches Ergebnis die von ihm (zeitlich nacheinander) ausgeführten Rezeptschritte (Arbeitsschritte eines Rezeptes) haben werden. Hierbei ist es denkbar, dass die jeweiligen Rezeptschritte (der Reihenfolge nach) auf einer räumlichen Zeitachse durch die Anzeige für den Benutzer präsentiert werden. Die der Bildinformation zugrundeliegenden Informationen können insbesondere Metadaten in Rezepten, Links in Rezepten zu Bildern, graphische Darstellungen, ein Bildbasierter Rezeptaufbau, insbesondere mit gerenderten Bildern, und/oder eine virtuelle Tour durch einen Kochvorgang sein, bei der insbesondere Rezeptschrittabhängige 3D-Darstellungen der Zutaten mit hinterlegten 3D-Hinweisen zur Bearbeitung hinterlegt sind. Die entsprechenden Daten können auf dem Haushaltsgerät selbst auf einem Speicher hinterlegt oder in einem Cloudspeicher gespeichert sein, auf den das Haushaltsgerät über eine Internetverbindung zugreifen kann. Bei der Darstellung der Bildinformation kann ferner vorgesehen sein, dass die Darstellung der Distanzinformation und/oder der Größeninformation mit der Menge einer Zutat skaliert. Es kann ebenfalls vorgesehen sein, dass die Bildinformation Rezeptanweisungen umfasst, die dem Benutzer in einer 3D-Darstellung Handlungsanweisungen, insbesondere das Verarbeiten von Zutaten, zeigen. Dabei kann insbesondere vorgesehen sein, dass die aktuell zu bearbeitende Zutat und/oder die aktuell anzuwendende Verarbeitung gezeigt werden. Ebenfalls kann vorgesehen sein, dass zukünftige Verarbeitungen und/oder Verarbeitungsschritte und/oder Zutaten dargestellt werden, wobei diese sich von der jeweiligen aktuellen Verarbeitung, dem aktuellen Verarbeitungsschritt oder der aktuellen Zutat in ihrer Darstellung insbesondere durch die Größe der Darstellung und/oder der dargestellten Tiefe unterscheiden. Insbesondere kann vorgesehen sein, dass je näher sich eine zukünftige Verarbeitung und/oder ein zukünftiger Verarbeitungsschritt und/oder eine zukünftige Zutat an der aktuellen Verarbeitung und/oder dem Verarbeitungsschritt und/oder der Zutaten, diese von der Anzeige zunehmend größer und/oder zunehmend näher dargestellt werden.

Ferner kann vorgesehen sein, dass die Bildinformation die Darstellung von Positionen von Zutaten in der Küche umfasst, wobei dem Benutzer ein 3-D Bild seiner Küchenumgebung präsentiert wird. Hierzu kann vorgesehen sein, dass der Benutzer hierzu vorab eine Bildaufnahme an das Haushalsgerät übermittelt. Dadurch kann der Benutzer die Position von zu verarbeitenden Zutaten besonders schnell und einfach erfassen, sodass die Bedienung des Haushaltsgeräts vereinfacht wird.

Das erfindungsgemäße Haushaltsgerät bietet den Vorteil, dass von der Anzeige des Haushaltsgerätes dargestellte Informationen in Form von Bildinformation vom Benutzer leicht erfasst und beispielsweise der Status eines Haushaltsgerätes besonders gut vom Benutzer verstanden werden kann. Auch Anweisungen an den Benutzer werden für den Benutzer leichter verständlich. Der Benutzer wird also insgesamt in der Bedienung des Haushaltsgerätes unterstützt, sodass ihm die Benutzung leichter fällt und das gewünschte Ergebnis der Haushaltstätigkeit intuitiv erreicht werden kann. Insbesondere, wenn es sich bei dem Haushaltsgerät um eine Küchenmaschine handelt, kann die Benutzung für den Benutzer vereinfacht werden, wodurch insbesondere sichergestellt wird, dass das Kochergebnis zuverlässig zufriedenstellend erreicht werden kann.

Vorzugsweise kann bei einem erfindungsgemäßen Haushaltsgerät vorgesehen sein, dass die Anzeige ein autostereoskopisches Display und/oder eine Virtual-Reality-Brille und/oder ein holographisches Display aufweist. Mit einem autostereoskopischen Display ist eine Anzeige gemeint, welche beim Benutzer einen Tiefeneindruck erzeugt, ohne dass hierfür weitere Hilfsmittel auf Benutzerseite in Form beispielsweise einer Brille oder eines "Head-mounted Displays" erforderlich wären. Hierzu wird den Augen des Benutzers jeweils ein eigenes Bild präsentiert, welche durch die Verarbeitung im Gehirn des Benutzers einen dreidimensionalen Bildeindruck erzeugen. Dies bietet insbesondere den Vorteil, dass der Benutzer keine weiteren Hilfsmittel für die Benutzung des Haushaltsgerätes benötigt, wodurch die Bedienung des Haushaltsgerätes zusätzlich vereinfacht wird. Es kann ebenfalls vorgesehen sein, dass die Anzeige eine spezielle Brille, eine Virtual-Reality-Brille bzw. ein Head-mounted Display aufweist. Eine solche Brille weist in der Regel zumindest zwei Displays auf, welche jeweils sich voneinander unterscheidende Bilder zeigen, wobei die Displays derart vor den Augen des Benutzers anordbar sind, dass der Benutzer mit einem Auge jeweils nur ein Display bzw. die darauf gezeigte Bildinformation sehen kann. Auch hierdurch wird bei der Betrachtung beim Benutzer ein Tiefeneindruck erzeugt. Diese Brillen bieten den Vorteil, dass eine besonders gute Immersion des Benutzers erreicht wird, sodass der Benutzer das Haushaltsgerät besonders einfach bedienen kann. Bei einem holographischen Display wird insbesondere Lichtbeugung benutzt, um ein virtuelles dreidimensionales Bild bzw. einen Tiefeneindruck beim Benutzer zu erzeugen. Auch holographischen Displays bieten den Vorteil, dass keine speziellen Brillen oder weitere Hilfsmittel erforderlich sind, um beim Benutzer den tiefen Eindruck zu erwecken.

Weiterhin ist es bei einem erfindungsgemäßen Haushaltsgerät denkbar, dass die Anzeige zumindest eine der folgenden Komponenten aufweist: eine optische Komponente, insbesondere ein Linsenarray, eine Barrierenmaske (engl. barrier-mask), oder eine Leuchteinheit. Mit anderen Worten kann vorgesehen sein, dass das von der Anzeige emittierte Licht durch ein optisches Element, beispielsweise eine Linse, einen Filter oder ein Gitter gebrochen, gebeugt, absorbiert, (re)emittiert, oder anderweitig physikalisch beeinflusst wird, insbesondere um den Tiefeneindruck der durch die Anzeige wiedergegebenen Bildinformation beim Benutzer zu erwecken. Das Vorsehen optischer Komponenten bietet dabei den Vorteil, dass diese eine kompakte Bauform des Haushaltsgerätes ermöglichen und vom Benutzer keine weiteren Hilfsmittel erfordern, sodass die Bedienung des Haushaltsgerätes für den Benutzer vereinfacht ist. Bei einem Linsenarray kann vorgesehen sein, dass das Linsenarray eine Vielzahl von Linsen, insbesondere Zylinderlinsen, aufweist, welche geeignet sind, beim Benutzer jeweils eine wiedergegebene Bildinformation für das linke Auge und eine Bildinformation für das rechte Auge bereitzustellen, wodurch ein Tiefeneindruck beim Benutzer erzeugt werden kann. Hierzu kann eine Leuchteinheit vorgesehen sein, welche sich ausgehend vom Auge des Betrachters hinter dem Linsenarray befindet und die Bildinformationen durch die Emission von Photonen wiedergibt, wobei die von der Leuchteinheit emittierten Photonen durch das Linsenarray, insbesondere durch Brechung, abgelenkt werden, sodass jeweils das rechte und linke Auge des Betrachters unterschiedliche Bildinformationen wahrnehmen. Weiterhin kann vorgesehen sein, dass eine Barrierenmaske dazu ausgebildet ist, dass beim Benutzer für das rechte und linke Auge jeweils unterschiedliche Bildinformationen ankommen und somit den Tiefeneindruck erzeugen. Hierzu kann vorgesehen sein, dass eine Leuchteinheit sich ausgehend vom Auge des Betrachters hinter der Barrierenmaske befindet und die Bildinformationen durch Emission von Photonen wiedergibt, wobei die von der Leuchteinheit emittierten Photonen durch die Barrierenmaske teilweise blockiert werden, sodass das rechte und linke Auge des Betrachters unterschiedliche Bildinformationen wahrnehmen. Bei der Leuchteinheit kann es sich insbesondere um eine Flüssigkristallanzeige handeln, welche von Light Emitting Diodes (LEDs) und/oder Organic Light Emitting Diodes (OLEDs) beleuchtet wird. Die Verwendung von LEDs bietet den Vorteil, dass diese auch bei geringer Leistungsaufnahme viel Licht abstrahlen können, sodass für den Benutzer die wiedergegebene Information auch bei geringerer Leistungsaufnahme leicht erkennbar ist. Die Verwendung von OLEDs bietet den Vorteil, dass diese einem besonders hohen Kontrast aufweisen, sodass für den Benutzer die wiedergegebene Bildinformation leicht erkennbar ist. Für die Flüssigkristallanzeige kommen insbesondere Flüssigkristallanzeigen nach dem Typ Twisted Nematic (TN), Vertical Alignment (PVA/MVA) sowie In-Plane Switching (IPS) in Frage. Die Verwendung von TN-Panelen bietet den Vorteil, dass diese besonders Reaktion schnell sind, wodurch beim Benutzer auch schnelle Bewegungsabläufe gut erkennbar sind, sodass die wiedergegebene Bildinformation leicht aufgenommen werden kann. Die Verwendung von PVA-Paneln bietet den Vorteil, dass diese einen hohen Kontrast aufweisen und gleichzeitig verhältnismäßig blickwinkelunabhängig funktionieren, sodass der Benutzer die wiedergegebene Bildinformation gut aufnehmen kann. Auch IPS-Panels bieten den Vorteil breiter Blickwinkel, wobei diese außerdem eine hohe Farbtreue aufweisen, sodass der Benutzer die wiedergegebene Bildinformation leicht aufnehmen und das Haushaltsgerät einfach bedienen kann.

Im Rahmen der Erfindung ist es weiterhin denkbar, dass die durch die Anzeige wiedergegebene Bildinformation an einer definierten Bildposition in Relation zur Anzeige beim Benutzer einen Tiefeneindruck erzeugt, wobei die definierte Bildposition der Positionsinformation des Benutzers entspricht und insbesondere der definierten Bildposition angepasst werden kann, wenn ein Benutzer sich in Relation zur Anzeige bewegt. Mit anderen Worten kann vorgesehen sein, dass die Bildinformation, welche von der Anzeige wiedergegeben wird, an einer definierten Position, an welcher sich der Benutzer befindet, den Tiefeneindruck beim Benutzer erzeugen kann. Dabei kann die Positionsinformation genau der definierten Bildposition entsprechen, sodass bei der Positionsinformation, welche der Position des Benutzers entspricht, der Tiefeneindruck beim Benutzer erweckt werden kann. Die Positionsinformation kann beispielsweise in einem Abstand von der Anzeige sowie einem Azimutwinkel in Bezug auf die Anzeige bzw. einer Normalen auf der Anzeige und einer Höhe von der Anzeige definiert sein. Üblicherweise bewegt sich ein Benutzer zumindest minimal, wenn er das Haushaltsgerät verwendet oder sich diesem zur Benutzung nähert. Dementsprechend kann vorteilhaft vorgesehen sein, dass die definierte Bildposition sich entsprechend der Positionsinformation des Benutzers anpasst, sodass dieser zu jeder Zeit, zu der er das Haushaltsgerät benutzt bzw. sich dem Haushaltsgerät annähert, einen Tiefeneindruck beim Betrachten der Bildinformation erhält. Mit anderen Worten kann vorgesehen sein, dass die Bildposition der Position des Benutzers nachgeführt wird. Damit wird der Vorteil erreicht, dass der Benutzer zu jedem Zeitpunkt die dargestellten Bildinformationen leicht wahrnehmen und somit das Haushaltsgerät besser bedienen kann.

Weiterhin ist es bei einem erfindungsgemäßen Haushaltsgerät denkbar, dass die Positionsvorrichtung zur Erfassung jeweils einer Positionsinformation bei mehreren Benutzern geeignet ist, und/oder dass die Anzeige dazu geeignet ist, mehrere Bildinformationen wiederzugeben, die bei mehreren Benutzern jeweils einen Tiefeneindruck erzeugen. Demnach kann bei der Positionsvorrichtung vorgesehen sein, dass diese auch mehrere Benutzer jeweils einzeln ortet und eine Positionsinformation für jeweils einen Benutzer bestimmen kann. Hierzu kann beispielsweise vorgesehen sein, dass ein Sensor, insbesondere eine Kamera, dazu vorgesehen ist, mehrere Benutzer zu detektieren und voneinander zu separieren, sodass die Positionsinformation für einzelne Benutzer ermittelt werden kann. Alternativ oder in Ergänzung dazu kann mit anderen Worten vorgesehen sein, dass, wenn sich mehrere Benutzer in der Nähe des Haushaltsgerätes befinden, jeder Benutzer eine für ihn angepasste Bildinformation angezeigt bekommt, die für jeden Benutzer einzeln einen Tiefeneindruck erzeugt. Hierzu kann vorgesehen sein, dass die Anzeige für jeden Benutzer jeweils zwei Bilder erzeugt, wobei die zwei Bilder jeweils ein rechtes oder ein linkes Auge des jeweiligen Benutzers erreichen und so ein Tiefeneindruck erzeugt wird. Dabei kann insbesondere vorgesehen sein, dass die Steuereinheit die zwei Bilder entsprechend der Positionsinformation in Echtzeit erzeugt. Hierdurch wird das Benutzererlebnis weiter verbessert.

Im Rahmen der Erfindung ist es weiterhin denkbar, dass die Anzeige einen 2D-Modus und einen 3D-Modus aufweist, wobei insbesondere die Anzeige auf Basis der Positionsinformation zwischen dem 2D-Modus und einen 3D-Modus wechselt. Mit anderen Worten kann vorgesehen sein, dass die Anzeige auch in einen Modus zurückfallen kann, in welchem kein Tiefeneindruck beim Benutzer erzeugt wird. Dennoch können auch in einem 2-D Modus dreidimensionale Objekte, dann jedoch als Projektion auf einen zweidimensionalen Raum, für den Benutzer dargestellt werden. Insbesondere kann vorgesehen sein, dass, wenn das Steuereinheit basierend auf der von der Positionsvorrichtung ermittelten Positionsinformation erkennt, dass an der Position des Benutzers gemäß der Positionsinformation kein Tiefeneindruck durch die Anzeige erzeugbar ist, die Anzeige vom 3-D Modus in den 2-D Modus wechselt, bzw. dass die Anzeige vom 2-D Modus in den 3-D Modus wechselt, sobald die Steuereinheit erkennt, dass an eine Position des Benutzers gemäß der Positionsinformation (wieder) ein Tiefeneindruck durch die Anzeige erzeugbar ist. Es kann jedoch ebenfalls vorgesehen sein, dass der Benutzer durch eine Eingabe, insbesondere an der Positionsvorrichtung, zwischen dem 2-D Modus und dem 3-D Modus selbstständig wechseln kann.

Weiterhin ist es bei einem erfindungsgemäßen Haushaltsgerät denkbar, dass ferner eine Benutzerkennungsvorrichtung vorgesehen ist, welche dazu ausgebildet ist, den Benutzer zu identifizieren, wobei die Benutzerkennungsvorrichtung insbesondere dazu ausgebildet ist, mit einem mobilen Identifikationsgeber des Benutzers zu kommunizieren. Alternativ oder in Ergänzung ist es bei einem erfindungsgemäßen Haushaltsgerät denkbar, dass ferner eine Benutzerkennungsvorrichtung vorgesehen ist, welche dazu ausgebildet ist, den Benutzer aktiv und/oder passiv zu identifizieren, wobei insbesondere die durch die Anzeige wiedergegebene Bildinformation für den identifizierten Benutzer spezifisch ist. Mit anderen Worten kann am Haushaltsgerät eine Einrichtung vorgesehen sein, welche in die Identität eines Benutzers erkennen kann. Dies bietet für den Benutzer den Vorteil, dass die Bildinformation für den erkannten Benutzer personalisiert angepasst werden kann, sodass die Bedienung des Haushaltsgerätes für den Benutzer weiter vereinfacht wird. Dabei kann sich der Benutzer beispielsweise selbst am Haushaltsgerät an der Benutzerkennungsvorrichtung anmelden. Es kann jedoch auch vorgesehen sein, dass der Benutzer einen mobilen Identifikationsgeber mit sich führt, an dem die Benutzerkennungsvorrichtung erkennt, welcher Benutzer sich in der Nähe des Haushaltsgerätes befindet. Beim mobilen Identifikationsgeber kann es sich beispielsweise um ein Mobilfunkgerät und/oder ein, insbesondere personalisiertes, RFID-Tag handeln. Es kann vorgesehen sein, dass der mobile Identifikationsgeber drahtlos, insbesondere per Bluetooth (BT), Bluetooth low energy (BTLE) oder Wireless Local Area Network (WLAN), mit der Benutzerkennungsvorrichtung kommuniziert. Dies bietet den Vorteil, dass die Identität des Benutzers besonders einfach festgestellt werden kann und dieser, ohne seine Benutzerdaten bei der Benutzerkennungsvorrichtung selbst anzugeben, personalisierte Informationen und eine auf ihn abgestimmte Bildinformation, insbesondere in Bezug auf die Größe des Benutzers, angezeigt bekommen kann. Dies bietet für den Benutzer den Vorteil, dass die Handhabung des Haushaltsgerätes weiter vereinfacht wird. Es kann ebenfalls vorgesehen sein, dass die Benutzererkennungsvorrichtung dazu geeignet ist, Ultrabreitbandsignale (UWB) zu senden und/oder zu empfangen und durch die UWB, insbesondere in Kommunikation mit dem mobilen Identifikationsgeber, welcher ebenfalls dazu eingerichtet sein kann, UWB zu senden und/oder zu empfangen, die Position des Benutzers und/oder des mobilen Identifikationsgebers zu bestimmen. Dies bieten den Vorteil, dass die Position des Benutzers bzw. des mobilen Identifikationsgebers besonders sicher erkannt werden kann.

Es ist ferner bei einem erfindungsgemäßen Haushaltsgerät denkbar, dass die Anzeige, insbesondere an einem Gehäuse der Anzeige zumindest eine Drehachse, insbesondere zwei Drehachsen, aufweist, um die die Anzeige, insbesondere basierend auf der Positionsinformation, in Relation zum Benutzer gedreht werden kann. Mit anderen Worten kann vorgesehen sein, dass die Anzeige, insbesondere um zwei Drehachsen, drehbar in Bezug auf den Benutzer bzw. dessen Gesicht gelagert sein kann. Dies bietet den Vorteil, dass die von der Anzeige wiedergegebene Bildinformation entsprechend der Position des Benutzers so angepasst werden kann, dass in einem besonders großen Bereich von möglichen Positionen des Benutzers beim Benutzer ein Tiefeneindruck erzeugt werden kann. Wenn es sich beim Haushaltsgerät beispielsweise um eine Waschmaschine handelt, kann dem Benutzer sowohl einen Tiefeneindruck erweckende Bildinformation angezeigt werden, wenn dieser vor der Waschmaschine steht, um beispielsweise das Waschprogramm auszuwählen, als auch dann, wenn er gerade die Waschmaschine belädt und sich hierfür in einer gebückten Haltung befindet. Wenn es sich bei dem Haushaltsgerät beispielsweise um eine Küchenmaschine handelt, kann der Benutzer sowohl einen Tiefeneindruck erzeugende Bildinformationen angezeigt bekommen, wenn er sich direkt vor der Küchenmaschine steht, als auch, wenn sich der Benutzer neben der Küchenmaschine befindet, um beispielsweise Zutaten für die Zubereitung in der Küchenmaschine vorzubereiten (beispielsweise im Spülbecken zu waschen). Es kann vorgesehen sein, dass die Anzeige kardanisch gelagert ist. Dies bietet den Vorteil, dass insbesondere dann, wenn das Haushaltsgerät sich bewegt, die Anzeige unabhängig von der Bewegung des Haushaltsgerätes in Relation zum Gesicht des Benutzers ausgerichtet werden kann, sodass es auch bei einer Bewegung des Haushaltsgerätes möglich bleibt, dem Benutzer eine Bildinformation anzuzeigen, welche bei ihm einen Tiefeneindruck erweckt.

Weiterhin ist es bei einem erfindungsgemäßen Haushaltsgerät denkbar, dass eine weitere Anzeige vorgesehen ist, welche insbesondere als 2D-Display ausgebildet ist. Mit anderen Worten kann das Haushaltsgerät über zumindest eine weitere Anzeige verfügen, welche insbesondere ohne eine 3-D Funktion ausgebildet ist. Dies bietet den Vorteil, dass dem Benutzer auch Informationen, welche durch eine dreidimensionale Darstellungsweise keinen Mehrwert erhalten, unabhängig von der Anzeige angezeigt werden können, sodass für den Benutzer die Bedienung des Haushaltsgerätes vereinfacht wird. Insbesondere kann vorgesehen sein, dass dem Benutzer auf der weiteren Anzeige Informationen zum Status der Anzeige angezeigt werden, beispielsweise in welche Richtung die Anzeige gedreht werden muss, damit beim Benutzer die wiedergegebene Bildinformation einen Tiefeneindruck erzeugen kann. Es kann vorgesehen sein, dass die Richtung, in die die Anzeige gedreht werden muss, aus dem Benutzerprofil des Benutzers abgeleitet wird. Dies bietet den Vorteil, dass sich der Benutzer optimal positionieren kann, damit die Bildinformation einen Tiefeneindruck erzeugt.

Es ist ferner bei einem erfindungsgemäßen Haushaltsgerät denkbar, dass die Positionsvorrichtung zumindest eines der folgenden Bauteile umfasst:
- eine manuell bedienbare Eingabeeinheit, insbesondere einen Drehknopf, die insbesondere dazu ausgebildet ist, zumindest die Bearbeitungsvorrichtung durch eine Eingabe des Benutzers zu steuern,
- eine Kamera, die insbesondere dazu ausgebildet ist, den Benutzer zu erfassen,
- einen Gestensensor, welcher dazu ausgebildet ist, eine Geste des Benutzers zur Steuerung des Haushaltsgerätes zu erfassen, oder
- einen Schallwandler, welcher dazu ausgebildet ist, eine Spracheingabe des Benutzers zur Steuerung des Haushaltsgerätes zu erfassen, wobei der Schallwandler insbesondere als ein Mikrofon ausgebildet ist.

Es kann ebenfalls vorgesehen sein, dass die Position und/oder die Größe des Benutzers aus einem Benutzerprofil abgeleitet werden. Ferner können aus einem Benutzerprofil Steuerparameter für die Positionsvorrichtung und/oder die Steuereinheit verwendet werden und als Grundlage dienen für die Anpassung der Bildinformation insbesondere an eine Größe des Benutzers und/oder einem Abstand des Benutzers von der Anzeige. Die manuell bedienbare Eingabeeinheit, welche insbesondere als Drehknopf ausgebildet sein kann, bietet den Vorteil, dass der Benutzer das Haushaltsgerät bedienen kann, auch wenn beispielsweise die Positionsvorrichtung und/oder die Anzeige für ihn gerade nicht sichtbar ist. Wenn der Benutzer beispielsweise seitlich von dem Haushaltsgerät positioniert ist, sodass er beispielsweise mit dem Arm zwar die manuell bedienbare Eingabeeinheit erreichen, die Anzeige jedoch nicht sehen kann, kann er dennoch durch die Eingabe an der Positionsvorrichtung beispielsweise die Funktion des Haushaltsgerätes starten oder stoppen. Dabei bietet die Ausgestaltung als Drehknopf den Vorteil, dass diese ein besonders gutes haptisches Feedback für den Benutzer bietet und daher besonders leicht bedienbar ist. Die manuell bedienbare Eingabeeinheit kann derart ausgebildet sein, dass der Benutzer die Eingabe (ausschließlich) auf der Anzeige vornehmen kann. Insbesondere kann die manuell bedienbare Eingabeeinheit als Touch-Display ausgebildet sein. Dies bietet den Vorteil, dass dem Benutzer die Bedienung erleichtert wird, da er bereits an bedienbare Anzeigen gewöhnt ist und diese darüber hinaus (aufgrund der glatten Oberfläche) leicht zu reinigen sind. Über die manuell bedienbare Eingabeeinheit kann der Benutzer beispielsweise seine Größe oder seine Identität eingeben, sodass die Steuereinheit die wiedergegebene Bildinformation durch die Anzeige dahingehend anpassen kann, dass der Tiefeneindruck an der durch die Größe bzw. Identität vorgegebene Positionsinformation angepasst und optimiert wird.

Die Kamera bietet den Vorteil, dass die Positionsvorrichtung einen oder mehrere Benutzer besonders leicht erfassen kann. Dabei kann insbesondere vorgesehen sein, dass die Kamera zusätzlich eine Beleuchtungseinheit aufweist, welche insbesondere Infrarotlicht ausstrahlt, um die sich in der Nähe der Positionsvorrichtung befindenden Benutzer auszuleuchten. Hierdurch kann die Bildqualität der Kamera verbessert und die Ermittlung der Positionsinformation der Benutzer erleichtert werden. Die Verwendung einer Infrarotlichtquelle bietet den Vorteil, dass diese für die Benutzer unsichtbar ist, und diese so bei der Benutzung des Haushaltsgerätes nicht irritiert werden, was die Benutzung des Haushaltsgerätes weiter vereinfacht. Ebenfalls kann vorgesehen sein, dass die Kamera dazu geeignet ist, eine Laufzeitanalyse durchzuführen, wodurch insbesondere der Abstand des Benutzers bestimmbar ist. Es kann vorgesehen sein, dass die Kamera die Augen des Benutzers, insbesondere kontinuierlich, erfasst. Dabei kann die Kamera die Position der Augen als Positionsinformation an die Steuereinheit übermitteln, welche die durch die Anzeige angezeigte Bildinformation entsprechend anpasst und insbesondere der aktuellen Position und/oder Blickrichtung des Benutzers entsprechend nachführt. Dadurch kann der Tiefeneindruck beim Benutzer auch dann erzeugt werden, wenn dieser sich bewegt.

Ein Gestensensor, welcher dazu ausgebildet ist, eine Geste des Benutzers zur Steuerung des Haushaltsgerätes zu erfassen, bietet den Vorteil, dass der Benutzer bei der Bedienung des Haushaltsgerätes nicht mit dem Haushaltsgerät in Berührung kommen muss, um dieses zu bedienen. Insbesondere wenn es sich bei dem Haushaltsgerät um eine Küchenmaschine handelt, kann dies von Vorteil sein, da der Benutzer möglicherweise beim Zubereiten der Speisen schmutzige Hände hat, mit denen er dann nicht die Küchenmaschine berühren muss. Auch dies bietet den Vorteil, dass die Benutzung des Haushaltsgerätes vereinfacht wird.

Ein Schallwandler (für ein Spracherkennungssystem), welcher dazu ausgebildet ist, eine Spracheingabe des Benutzers zur Steuerung des Haushaltsgerätes zu erfassen, bietet den Vorteil, dass auch hier der Benutzer bei der Bedienung des Haushaltsgerätes, nicht mit dem Haushaltsgerät in Berührung kommen muss. Dabei kann der Schallwandler insbesondere das Mikrofon ausgebildet sein. Dies stellt eine besonders einfache und kostengünstige Form eines Schallwandlers dar. Es kann ebenfalls vorgesehen sein, dass der Schallwandler bzw. das Mikrofon eine Richtcharakteristik aufweist/aufweisen, sodass insbesondere einer Positionsinformation des Benutzers Spracheingabe des Benutzers zur Steuerung des Haushaltsgerätes erfasst werden. Dies bietet den Vorteil, dass besonders sicher die Spracheingabe des Benutzers und nicht etwa Nebengeräusche erfasst werden, wodurch die Benutzung des Haushaltsgerätes vereinfacht wird. Damit kann das Haushaltsgeräte auch ein Spracherkennungssystem zur Steuerung umfassen, wodurch die Bedienung für den Benutzer weiter vereinfacht wird.

Weiterhin kann bei einem erfindungsgemäßen Haushaltsgerät vorteilhafterweise vorgesehen sein, dass der Gestensensor zumindest eines der folgenden Bauteile aufweist:
- eine Kamera,
- einen Radarsensor,
- einen Lidarsensor,
- einen kapazitiven Sensor oder
- einen Ultraschallsensor.

Eine Kamera am Gestensensor bietet den Vorteil, dass damit Gesten des Benutzers besonders einfach erkannt werden können. Insbesondere wird ein zusätzlicher Vorteil erreicht, wenn die Positionsvorrichtung zur Ermittlung der Positionsinformation auf die gleiche Kamera zurückgreifen kann, da somit Bauteile eingespart werden können.

Ein Radar- und ein Lidarsensor bieten den Vorteil, dass damit die Position des gestikulierenden Körperteils des Benutzers, beispielsweise eine Hand oder ein Fuß, besonders sicher erkannt werden kann und auch eine Bewegung des Körperteils besonders schnell und sicher nachverfolgt werden kann. Dadurch lassen sich Gesten besonders sicher feststellen, sodass die Bedienbarkeit für den Benutzer erhöht ist.

Ein kapazitiver Sensor bietet den Vorteil, dass dieser besonders günstig herstellbar ist und gleichzeitig eine Annäherung eines Körperteils eines Benutzers sicher detektieren kann, sodass hierdurch eine besonders leichte Bedienung durch den Benutzer ermöglicht wird.

Bei einem Ultraschallsensor kann insbesondere die Laufzeit eines Signals gemessen werden, welches vom Ultraschallsensor ausgesendet und von dem zu erfassenden Element reflektiert wird, wobei sich ein Abstand des zu erfassenden Elements aus der Laufzeitdifferenz zwischen dem ausgesendeten und dem reflektierten Signal ergeben kann. Wenn der Gestensensor einen Ultraschallsensor umfasst, bietet dies den Vorteil, dass die Position des Benutzers bzw. eines Körperteils des Benutzers besonders sicher erfasst werden kann, was die Bedienbarkeit erhöht.

Es kann vorgesehen sein, dass mehrere Bauteile zur Erfassung einer Geste des Benutzers vorgesehen sind, wobei insbesondere die daraus ermittelten Daten miteinander durch die Steuereinheit abgeglichen werden können, um besonders sicher eine Geste des Benutzers zu erfassen.

Es ist ferner bei einem erfindungsgemäßen Haushaltsgerät denkbar, dass das Haushaltsgerät mehrteilig ausgebildet ist und zumindest einen Hauptkörper aufweist, welcher an eine Netzstromversorgung anschließbar ist und/oder an dem die Bearbeitungsvorrichtung vorgesehen ist, wobei insbesondere die Anzeige lösbar an dem Hauptkörper befestigt ist oder die Anzeige integral mit dem Hauptkörper verbunden ist. Mit anderen Worten kann das Haushaltsgerät mehrgliedrig bzw. modular aufgebaut sein, wobei insbesondere die einzelnen Komponenten miteinander verbindbar oder zumindest teilweise integral miteinander verbunden sind. Wenn das Haushaltsgerät als Küchenmaschine ausgebildet ist, kann beispielsweise vorgesehen sein, dass ein Hauptkörper vorgesehen ist, welcher zumindest teilweise stationär verbleibt, und mehrere vom Hauptkörper abnehmbare und mit diesem (wieder)verbindbare Teile, insbesondere eine Rührschüssel, vorgesehen sind. Es kann vorgesehen sein, dass der Hauptkörper insbesondere die Bearbeitungsvorrichtung, die Positionsvorrichtung, die Anzeige und/oder die Steuereinheit aufweist. Eine lösbar am Hauptkörper befestigte Anzeige bietet den Vorteil, dass die Anzeige vom Hauptkörper entfernt werden und vom Benutzer an eine Position bewegt werden kann, an der die Anzeige die Bildinformation derart wiedergeben kann, dass ein Tiefeneindruck beim Benutzer erzeugt wird. Dies ist insbesondere dann von Vorteil, wenn der Benutzer sich bei der Benutzung des Haushaltsgerätes bewegen muss.

Gemäß einem weiteren Aspekt der Erfindung ist ein Verfahren zum Betreiben eines Haushaltsgeräts, insbesondere Küchenmaschine zum Zubereiten von Speisen, aufweisend die folgenden Schritte:
- Erfassung einer Positionsinformation eines Benutzers durch eine Positionsvorrichtung,
- Wiedergabe einer Bildinformation durch eine Anzeige, welche dazu ausgebildet ist, beim Benutzer einen Tiefeneindruck zu erzeugen, wobei die Bildinformation abhängig ist von zumindest der Positionsinformation, vorgesehen.

Dabei kann die Bildinformation durch die Anzeige zur vereinfachten Steuerung des Haushaltsgeräts durch den Benutzer dienen.

Mit anderen Worten wird beim erfindungsgemäßen Verfahren eine Positionsinformation vom Benutzer durch die Positionsvorrichtung erfasst, und an der ermittelten Positionsinformation eine Bildinformation durch die Anzeige wiedergegeben, wobei die von der Anzeige wiedergegebene Bildinformation beim Benutzer einen Tiefeneindruck erzeugt. Der Benutzer hat dadurch die Möglichkeit, die Bildinformation dreidimensional wahrzunehmen, sodass hierdurch die Bedienung des Haushaltsgerätes vereinfacht wird. Dabei kann vorgesehen sein, dass die Positionsinformation an eine Steuereinheit übermittelt wird, und/oder dass diese Steuereinheit die Bildinformation bestimmt, welche durch die Anzeige wiedergegeben wird. Es kann vorgesehen sein, dass die Erfassung der Positionsinformation kontinuierlich erfolgt. Dies bietet den Vorteil, dass die Bildinformation einer Position des Benutzers auch dann einen Tiefeneindruck erzeugen kann, wenn dieser sich bewegt, sodass sich die Positionsinformation über die Zeit verändert. Es kann ebenfalls vorgesehen sein, dass die Erfassung der Positionsinformation in bestimmten Zeitabständen erfolgt, wobei Zeitabstände insbesondere größer als eine Bildwiederholfrequenz der Anzeige ausgebildet sind. Dies bietet den Vorteil, dass die erforderliche Rechenleistung zur Bestimmung der Positionsinformation reduziert werden kann.

Somit bringt ein erfindungsgemäßes Verfahren die gleichen Vorteile mit sich, wie sie bereits ausführlich mit Bezug auf ein erfindungsgemäßes Haushaltsgerät beschrieben worden sind.

Ferner kann bei einem erfindungsgemäßen Verfahren vorteilhafterweise vorgesehen sein, dass das Verfahren ferner zumindest einen der folgenden Schritte aufweist:
- Wiedergabe einer Bildinformation, welche für den Betrieb des Haushaltsgerätes spezifisch ist, durch eine Anzeige, wobei zusätzlich zu der Bildinformation eine vorherige Bildinformation und/oder eine nachfolgende Bildinformation dargestellt sind, wobei insbesondere sich zumindest zwei der Bildinformationen in einer Darstellungstiefe für den Benutzer unterscheiden,
- Initiale Erkennung eines Benutzers durch eine Benutzerkennung, wobei insbesondere im Falle eines Fehlschlags bei der Erkennung die Anzeige in einen 2D-Modus geschaltet wird,
- Erfassung einer Geste des Benutzers durch einen Gestensensor zur Steuerung des Haushaltsgeräts, und/oder Erfassung einer Spracheingabe des Benutzers zur Steuerung des Haushaltsgeräts durch einen Schallwandler,
- Ausführen einer Haushaltstätigkeit, insbesondere das zumindest teilweise automatische Zubereiten von Speisen, insbesondere gesteuert durch die Steuereinheit, insbesondere entsprechend der zumindest einer erfassten Geste des Benutzers.

Die Wiedergabe der Bildinformation bietet den Vorteil, dass der Benutzer eine (auch) räumliche Vorstellung der Haushaltstätigkeit erlangt, sodass die Bedienung des Haushaltsgerätes dadurch für den Benutzer erleichtert wird. Insbesondere die Darstellung zeitlich hintereinander ablaufender Prozesse lässt sich so für den Benutzer leichter veranschaulichen. Dabei können die Bildinformationen Ablaufinformationen eines Prozesses einer Haushaltstätigkeit zeigen, insbesondere einzelne Schritte eines Rezeptes. Hierzu ist es insbesondere hilfreich, wenn sich zumindest zwei der Bildinformationen in einer Darstellungstiefe für den Benutzer unterscheiden, mit anderen Worten also eine Bildinformation weiter entfernt vom Benutzer dargestellt wird als eine vorherige oder nachfolgende Bildinformation. Dabei kann vorgesehen sein, dass die einzelnen Bildinformationen auf einem Quader, insbesondere wie auf einer Art CD-Cover, räumlich dargestellt werden, und sich diese Bildinformationen im Zuge Abarbeitung der Haushaltstätigkeit in einem durch die Anzeige dargestellten dreidimensionalen Raum bewegen. Bei einer initialen Erkennung des Benutzers durch die Benutzerkennung wird sichergestellt, dass die Bildinformation dahingehend optimiert wird, dass beim Benutzer die durch die Anzeige wiedergegebene Bildinformation zuverlässig einen Tiefeneindruck erzeugen kann. Bei einem Fehlschlag der Benutzerkennung, mit anderen Worten, wenn ein Benutzer nicht eindeutig zugeordnet werden kann, kann die Anzeige in einem 2-D Modus betrieben werden. Dies bietet den Vorteil, dass auch ein Benutzer, welcher dem Haushaltsgerät noch nicht bekannt ist, das Haushaltsgerät sicher bedienen kann, beispielsweise um seine Benutzerkennung einzugeben. Die Erfassung einer Geste des Benutzers durch den Gestensensor bietet den Vorteil, dass der Benutzer zur Steuerung des Haushaltsgerätes das Haushaltsgerät bzw. die Positionsvorrichtung nicht mit seinen Händen berühren muss, wodurch die Benutzung des Haushaltsgerätes insgesamt vereinfacht wird.

Es kann vorgesehen sein, dass das Körperteil, welcher vom Gestensensor detektiert wird, als 3-D Benutzerobjekt in der Bildinformation wiedergegeben wird. Insbesondere kann vorgesehen sein, dass eine Hand des Benutzers als 3-D Benutzerobjekt in der Bildinformation wiedergegeben wird. Dies bietet den Vorteil, dass der Benutzer die im dreidimensionalen Raum stattfindende Geste ebenfalls räumlich dargestellt in der Bildinformation wiederfindet, sodass die Benutzung des Haushaltsgerätes vereinfacht wird.

Es kann ebenfalls vorgesehen sein, dass zumindest ein 3-D Objekt dargestellt wird, welches einem, insbesondere analogen, Eingabeobjekt, insbesondere einem Drehregler, entspricht. Dabei kann vorgesehen sein, dass der Benutzer das Eingabeobjekt durch eine Geste steuern kann, und das 3-D Objekt entsprechend der Eingabe des Benutzers angepasst wird. So kann der Benutzer beispielsweise durch eine Geste einen als 3-D Objekt dargestellten Drehregler drehen. Es kann auch vorgesehen sein, dass der Benutzer durch Gesten das Haushaltsgerät wie bei einem Theremin steuert, also beispielsweise mit der Geste einer Hand eine Eingabe vornimmt und mit einer weiteren Geste der anderen Hand eine weitere Eingabe vornimmt. Es kann ebenfalls vorgesehen sein, dass die Größe und/oder die vom Benutzer wahrgenommene Distanz des 3-D Objektes entsprechend einer Eingabe des Benutzers oder einem Status des Haushaltsgerätes (z.B. der Geschwindigkeit eines Mixers, dem gemesseneren Gewicht auf einer Waage) angepasst wird. Dies erleichtert ebenfalls die Bedienung des Haushaltsgerätes.

Es kann vorgesehen sein, das 3-D Benutzerobjekt mit weiteren 3-D Objekten zusammen in der Bildinformation derart dargestellt wird, dass dem Benutzer der Eindruck vermittelt wird, dass er mit der Geste das 3-D Objekt manipuliert. Beispielsweise kann die Große Auch dies bietet den Vorteil, dass der Benutzer das Haushaltsgerät besonders leicht bedienen kann.

Ein ähnlicher Vorteil wird durch die Erfassung einer Spracheingabe des Benutzers erreicht, wobei auch hier der Benutzer zur Steuerung des Haushaltsgerätes weder die Position die Einheit noch das Haushaltsgerät mit seinen Händen berühren muss, wodurch die Benutzung des Haushaltsgerätes insgesamt vereinfacht wird. Durch das Ausführen einer Haushaltstätigkeit, welches insbesondere teilweise automatisch erfolgen kann, wird insbesondere dann, wenn die Steuerung über eine Geste bzw. über eine Spracheingabe erfolgt, der Vorteil erreicht, dass die Benutzung des Haushaltsgerätes für den Benutzer besonders einfach ist.

Weiterhin kann bei einem erfindungsgemäßen Verfahren vorteilhafterweise vorgesehen sein, dass das Haushaltsgerät nach einem der Ansprüche 1 bis 12 ausgebildet ist. Somit kann das erfindungsgemäße Verfahren auf dem erfindungsgemäßen Haushaltsgerät, insbesondere der erfindungsgemäßen Küchenmaschine zum Zubereiten von Speisen durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Haushaltsgerät, welches als Küchenmaschine ausgebildet ist,
- Figur 2: ein erfindungsgemäßes Haushaltsgerät in einer seitlichen Ansicht mit einem Benutzer,
- Figur 3: ein Koordinatensystem, in dem eine Anzeige eines erfindungsgemäßen Haushaltsgerätes sowie ein Kopf eines Benutzers dargestellt sind,
- Figur 4: einen Teil eines erfindungsgemäßen Haushaltsgerätes,
- Figur 5: eine Anzeige eines erfindungsgemäßen Haushaltsgerätes,
- Figur 6: ein Beispiel für eine Bildinformation eines erfindungsgemäßen Haushaltsgerätes,
- Figur 7: ein Ausführungsbeispiel einer Anzeige, welche ein Linsenarray aufweist,
- Figur 8: ein Ausführungsbeispiel einer Anzeige, welche eine Barrierenmaske aufweist und
- Figur 9: ein erfindungsgemäßes Verfahren zum Betreiben eines Haushaltsgeräts.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

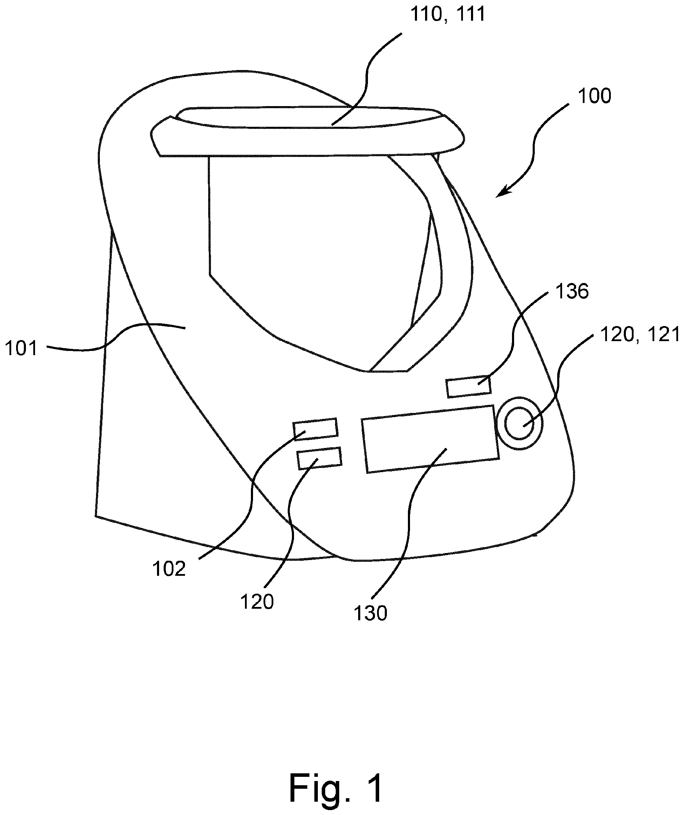

Figur 1 zeigt ein erfindungsgemäßes Haushaltsgerät 100, welches als Küchenmaschine 100 zum Zubereiten von Speisen ausgebildet ist. Dabei weist das Haushaltsgerät 100 eine Bearbeitungsvorrichtung 110, insbesondere ein Rührgefäß 111, zum zumindest teilweise automatischen Ausführen einer Haushaltstätigkeit auf. Bei der Haushaltstätigkeit kann es sich insbesondere um ein Verarbeiten von Zutaten handeln. Die Bearbeitungsvorrichtung 110 wird dabei durch eine Steuereinheit 102 gesteuert. Ebenfalls am Haushaltsgerät 100 vorgesehen ist eine Positionsvorrichtung 120, die zur Erfassung einer Positionsinformation 200 eines Benutzers 1 (hier nicht dargestellt), der das Haushaltsgerät 100 bedient, dient. Die Positionsvorrichtung 120 kann beispielsweise Sensoren aufweisen (in Fig. 1 links von der Anzeige 130 schematisch dargestellt) und/oder als manuell bedienbare Eingabeeinheit 121, insbesondere als Drehknopf 121 ausgebildet sein (in Fig. 1 rechts von der Anzeige 130 schematisch dargestellt). Die Positionsvorrichtung 120 übermittelt die erfasste Positionsinformation 200 an eine Steuereinheit 102. Ebenfalls in der Figur 1 dargestellt ist eine Anzeige 130, welche dazu ausgebildet ist, eine durch die Steuereinheit 102 bestimmte Bildinformation 140 wiederzugeben. Dabei erzeugt die durch die Anzeige 130 wiedergegebene Bildinformation 140 beim (hier nicht dargestellten) Benutzer 1 einen Tiefeneindruck und ist zumindest von der Positionsinformation 200 des Benutzers 1 abhängig.

Ebenfalls in der Figur 1 gezeigt ist, dass neben der Anzeige 130 eine weitere Anzeige 136 vorgesehen ist, welche insbesondere als 2-D Display 136 ausgebildet sein kann. In Bezug auf die Anzeige 130 kann vorgesehen sein, dass diese einen 2-D Modus und einen 3D Modus aufweist, wobei insbesondere die Anzeige 130 auf Basis der Positionsinformation 200 zwischen einem 2-D Modus und einem 3-D Modus wechseln kann.

Ferner ist der Figur 1 zu entnehmen, dass das Haushaltsgerät 100 mehrteilig ausgebildet sein kann, und zumindest einen Hauptkörper 101 aufweist, welche an eine Netzstromversorgung anschließbar ist und/oder an dem die Bearbeitungsvorrichtung 110 vorgesehen ist, wobei insbesondere die Anzeige 130 lösbar an dem Hauptkörper 101 befestigt sein kann oder die Anzeige 130 integral mit dem Hauptkörper 101 verbunden ist.

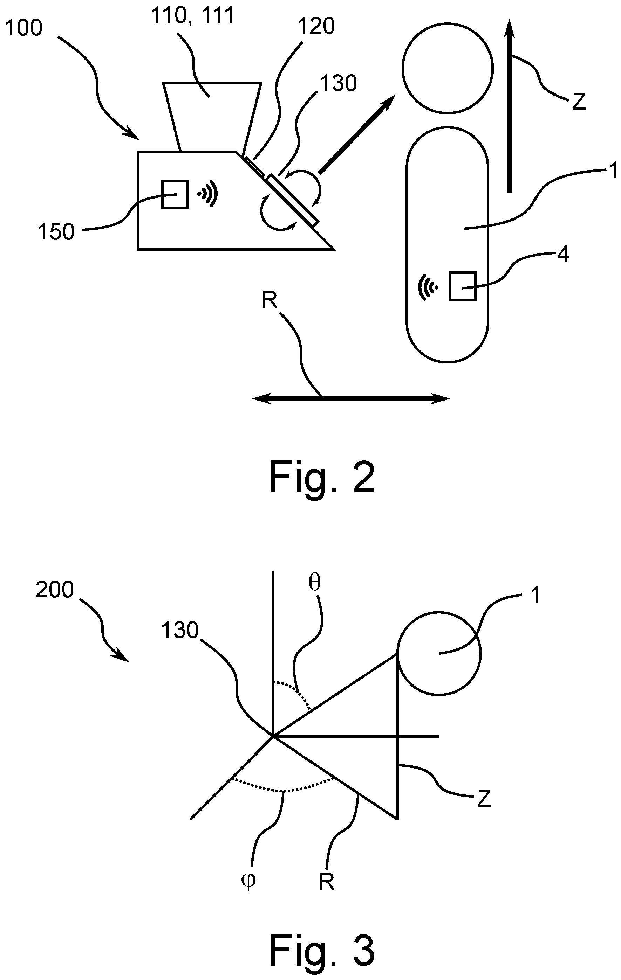

Die Figur 2 zeigt eine seitliche Ansicht des erfindungsgemäßen Haushaltsgerätes 100, wobei das Haushaltsgerät als Küchenmaschine 100 ausgebildet ist und eine Bearbeitungsvorrichtung 110 mit einem Rührgefäß 111 aufweist. Ebenfalls in der Figur 2 dargestellt ist ein Benutzer 1, welcher einen mobilen Identifikationsgeber 4 mit sich führt. Dieser mobile Identifikationsgeber 4 kann gemäß des gezeigten Ausführungsbeispiels mit einer Benutzerkennungsvorrichtung 150 zusammenwirken, welche am Haushaltsgerät vorgesehen ist. Die Benutzerkennungsvorrichtung 150 ist dazu ausgebildet, den Benutzer 1 zu identifizieren, wobei diese insbesondere dazu ausgebildet sein kann, mit einem mobilen Identifikationsgeber 4 des Benutzers 1 zu kommunizieren. Dabei kann der mobile Identifikationsgeber 4 insbesondere als Mobilfunktelefon und oder RFID-Tag 4 ausgebildet sein. Die Kommunikation zwischen dem mobilen Identifikationsgeber 4 und der Benutzerkennungsvorrichtung 150 kann insbesondere drahtlos, bevorzugt über Bluetooth, Bluetooth low energy und/oder WLAN erfolgen.

Ferner ist in der Figur 2 dargestellt, dass die Anzeige 130 eine Drehachse aufweist, um die die Anzeige 130, insbesondere basierend auf der Positionsinformation 200, in Relation zum Benutzer 1 gedreht werden kann. Dadurch wird ermöglicht, dass der Tiefeneindruck beim Benutzer auch dann erzeugt werden kann, wenn diese seine Position, insbesondere die **Höhe, welche** in der Figur 2 mit Z bezeichnet ist, ändert. Es kann insbesondere vorgesehen sein, dass die Anzeige 130 über einen Motor verfügt, welcher die Anzeige 130 automatisch so bewegt, dass eine Normale, die in der Figur 2 als Pfeil ausgehend von der Anzeige 130 dargestellt ist, stets auf das Gesicht des Benutzers 1 gerichtet ist. Dadurch kann sichergestellt werden, dass die von Anzeige 130 wiedergegebene Bildinformation 140 beim Benutzer 1 stets einen Tiefeneindruck erzeugen kann.

Gemäß der Figur 2 befindet sich der Benutzer 1 in einer Entfernung R vom Haushaltsgerät 100 und hat eine Größe Z. Es kann vorgesehen sein, dass der Benutzer seine Entfernung R und/oder seine Größe Z manuell der Positionsvorrichtung 120 durch eine Eingabe mitteilt. Alternativ oder in Ergänzung kann auch vorgesehen sein, dass die Positionsvorrichtung 120 sowohl den Abstand R als auch die Größe Z des Benutzers automatisch ermittelt.

Es kann ebenfalls vorgesehen sein, dass die Anzeige 130 um zwei Achsen drehbar ist. Auch eine kardanische Lagerung der Anzeige 130 kann vorgesehen sein, was den Vorteil bietet, dass die Anzeige 130 unabhängig von der Ausrichtung des Haushaltsgerätes 100 ein einem Raum für den Benutzer 1 optimal ausrichtbar ist.

In Figur 3 ist die Position eines Benutzers 1 in Relation zur Anzeige 130 dargestellt. Diese stellt im Wesentlichen die Positionsinformation 200 dar. So kann sich der Benutzer 1 in einem Abstand R und einem Azimutwinkel φ und einer Höhe Z zur Anzeige 130, insbesondere zu einem Mittelpunkt der Anzeige 130 bzw. einer Normalen auf den Mittelpunkt der Anzeige 130 aufhalten. Hierdurch kann die Position, insbesondere eines Kopfes, des Benutzers 1 als Positionsinformation 200 eindeutig festgelegt sein. Darüber hinaus kann die Normale einem Polarwinkel θ entsprechen.

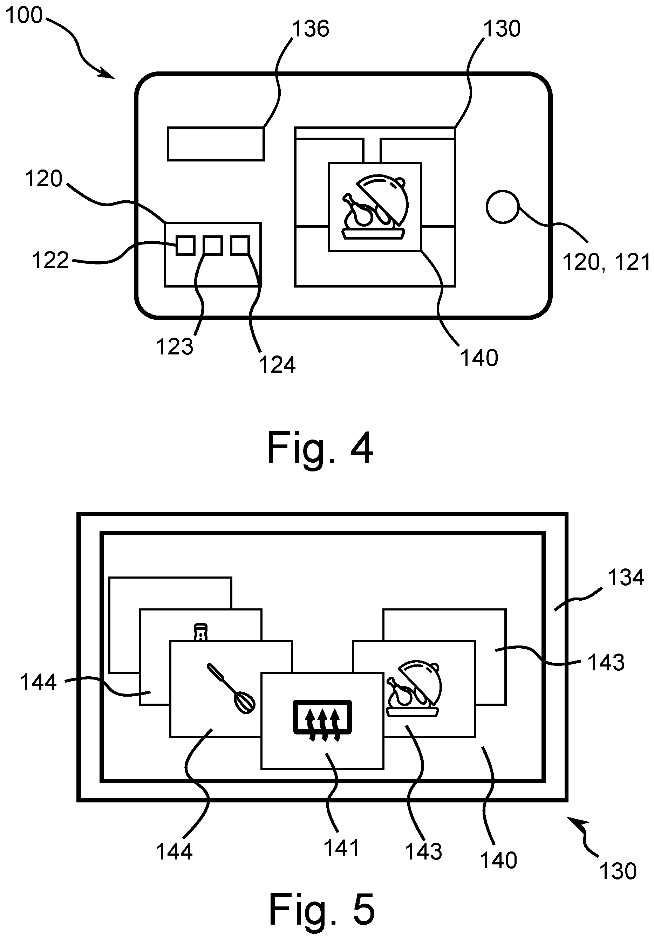

Die Figur 4 zeigt ein erfindungsgemäßes Haushaltsgerät 100, bei dem eine Anzeige 130 eine Bildinformation 400 darstellt. Darüber hinaus ist in der Figur 4 gezeigt, dass die Positionsvorrichtung 120 ferner eine Kamera 122, die insbesondere dazu ausgebildet ist, den Benutzer 1 zu erfassen, einen Gestensensor 123, welcher dazu ausgebildet ist, eine Geste des Benutzers 1 zur Steuerung des Haushaltsgerätes 100 zu erfassen, sowie einen Schallwandler 124, welcher dazu ausgebildet ist, eine Spracheingabe des Benutzers 1 zur Steuerung des Haushaltsgerätes 100 zu erfassen, wobei der Schallwandler 124 insbesondere als ein Mikrofon ausgebildet ist, aufweisen kann. Darüber hinaus ist bei dem Ausführungsbeispiel gemäß der Figur 4 vorgesehen, dass die Positionsvorrichtung 120 ferner eine manuell bedienbare Eingabeeinheit 121 in Form eines Drehknopfs 121 aufweist. Dabei kann die manuell bedienbare Eingabeeinheit 121 dazu ausgebildet sein, zumindest die Bearbeitungsvorrichtung 110 durch eine Eingabe des Benutzers 1 (beide hier nicht dargestellt) zu steuern.

Dabei kann der Gestensensor 123 zumindest eines der folgenden Bauteile aufweisen: Eine Kamera, einen Radarsensor, einen Lidarsensor, einen kapazitiven Sensor oder einen Ultraschallsensor.

Die Figur 5 zeigt eine Anzeige 130, welche eine Bildinformation 140 wiedergibt. Dabei weist gemäß der Figur 5 die Anzeige 130 einen Gehäuse 134, wobei insbesondere das Gehäuse 134 einen Rahmen hat, auf. An diesem Gehäuse 134 kann insbesondere die Positionsvorrichtung 120 vorgesehen, und insbesondere dieses integriert, sein. Ebenfalls in der Figur 5 gezeigt ist, dass die Bildinformation 140 Bildinformationen 141 umfassen kann, welche für den Betrieb des Haushaltsgerätes spezifisch sind. Im gezeigten Beispiel wird als spezifische Bildinformation 141 ein Symbol für eine Heizung angezeigt, welche beispielsweise in einer Küchenmaschine zum Zeitpunkt der Darstellung aktiv sein kann. Ebenfalls gemäß der Figur 5 dargestellt, kann die Bildinformation 140 auch vorherige Bildinformationen 144 und/oder nachfolgende Bildinformationen 143 umfassen, wobei insbesondere sich zumindest zwei der Bildinformationen 141, 143, 144 in einer Darstellungstiefe für den Benutzer 1 (hier nicht dargestellt) unterscheiden. Im gezeigten Beispiel der Figur 5 ist die spezifische Bildinformation 141 räumlich vor einer vorherigen Bildinformation 140 und einer nachfolgenden Bildinformation 143 gezeigt. Mit anderen Worten ist die Bildinformationen 140 in der Figur 5 als Ansammlung von räumlich voneinander getrennten quaderförmigen Informationsblöcken 141, 143, 144 dargestellt, welche insbesondere als eine CD-Cover innerhalb der Bildinformation 140 verteilt sind. Es kann insbesondere vorgesehen sein, dass ein Benutzer über eine Geste, welche von der Gestensteuerung 123 erkannt werden kann, die quaderförmigen Informationsblöcke 141, 143, 144 räumlich verschieben kann. Hierdurch wird die Benutzung des Haushaltsgeräts 100 vereinfacht, da der Benutzer insbesondere das Haushaltsgerät 100 nicht anfassen muss, und dennoch auch komplizierte Abfolgen von durchzuführenden Schritten abarbeiten kann.

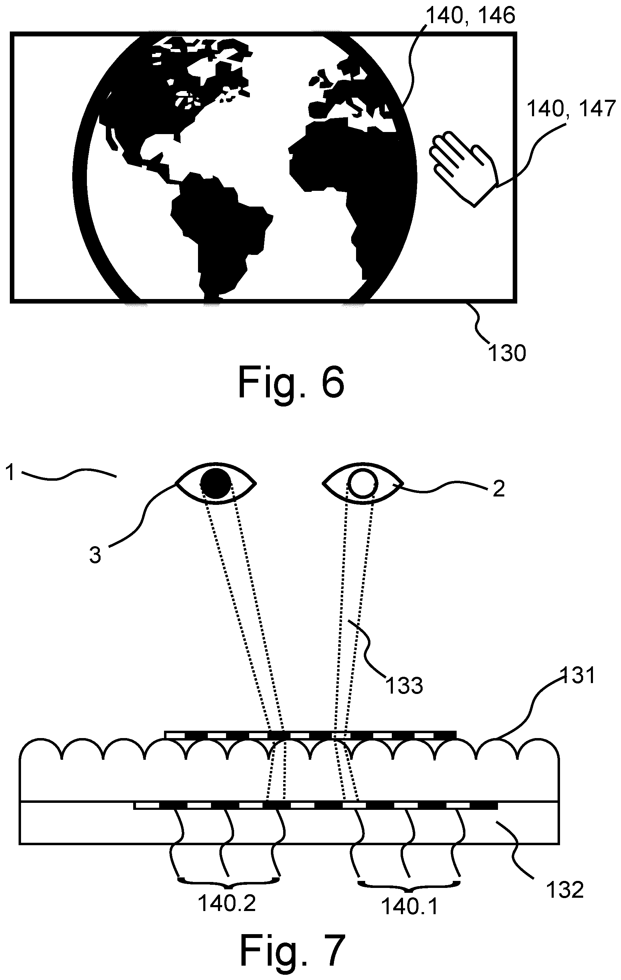

Die Figur 6 offenbart eine weitere Variante einer durch die Anzeige 130 dargestellten Bildinformation 140, bei dem ein 3-D Objekt 146 dargestellt wird. Neben dem 3-D Objekt 146 ist außerdem ein 3-D Benutzerobjekt 147 dargestellt, welches vom Benutzer 1 insbesondere durch eine von der Positionsvorrichtung 120 bzw. dem Gestensensor 123 erkannten Geste in der räumlichen Darstellung bewegt werden kann. Es kann vorgesehen sein, dass der Benutzer 1 durch die erkannte Geste am 3-D Objekt 146 eine Rezeptauswahl eingeben kann. Insbesondere kann vorgesehen sein, dass eine Hand des Benutzers als 3-D Benutzerobjekt 147 in der Bildinformation 140 wiedergegeben wird. Dies bietet den Vorteil, dass der Benutzer die im dreidimensionalen Raum stattfindende Geste, ebenfalls räumlich dargestellt, in der Bildinformation 140 wiederfindet, sodass die Benutzung des Haushaltsgerätes 100 vereinfacht wird. Es kann ebenfalls vorgesehen sein, dass das 3-D Benutzerobjekt 147 mit weiteren 3-D Objekten 146 zusammen in der Bildinformation 140 derart dargestellt wird, dass dem Benutzer 1 der Eindruck vermittelt wird, dass er mit der Geste das 3-D Objekt 146 manipuliert. Auch dies bietet den Vorteil, dass der Benutzer 1 das Haushaltsgerät 100 besonders leicht bedienen kann.

Die Figur 7 zeigt ein Ausführungsbeispiel der Anzeige 130, bei der die Anzeige eine optische Komponente 131 aufweist. Dies ist gemäß dem Beispiel der Figur 7 als Linsenarray 131 ausgebildet. Ferner kann, wie die Figur 7 darstellt, die Anzeige 130 ferner eine Leuchteinheit 132 aufweisen, welche sich ausgehend vom Auge 2, 3 des Betrachters 1 hinter dem Linsenarray 131 befindet und die Bildinformationen 140 durch die Emission von Photonen (hier als gestrichelte Linien in Form von Lichtstrahlen 133 dargestellt) wiedergibt. Dabei werden gemäß der Darstellung nach Figur 7 Bildinformationen 140.1, welche für das linke Auge 2 bestimmt sind, durch das Linsenarray 131 derart abgelenkt, dass diese Lichtstrahlen 133 nur auf das linke Auge 2 treffen, und Bildinformationen 140.2, welche für das rechte Auge 3 bestimmt sind, durch das Linsenarray 131 derart abgelenkt, dass die Lichtstrahlen 133 nur auf das rechte Auge 3 treffen. Das Linsenarray 131 ist demnach dazu geeignet, die Bildinformationen 140.1, die für das linke Auge 2 bestimmt sind, für das rechte Auge 3 zu blockieren und die Bildinformationen 140.2, die für das rechte Auge 3 bestimmt sind, für das linke Auge 2 zu blockieren.

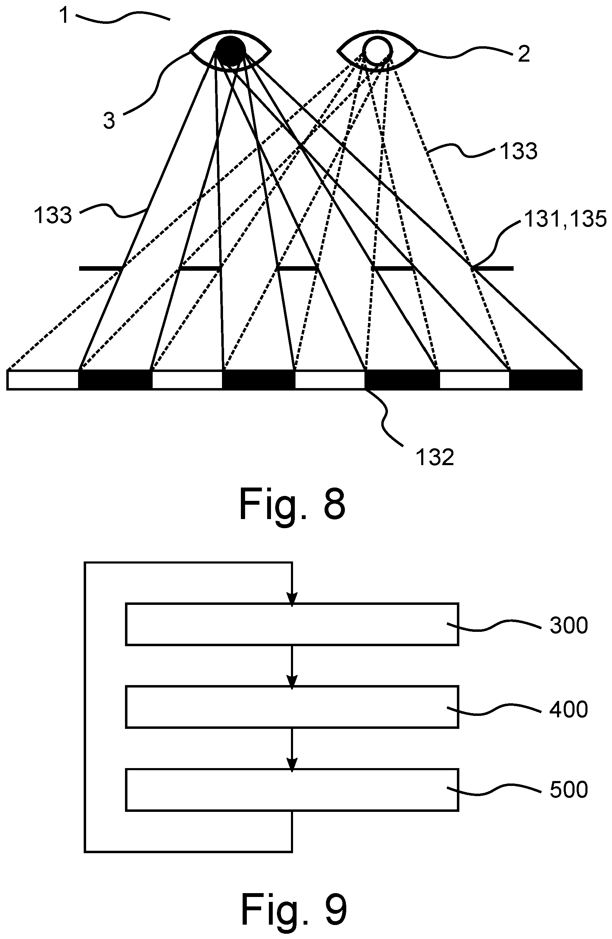

In Figur 8 ist ein alternatives Ausführungsbeispiel der Anzeige 130 gezeigt, bei dem die optische Komponente 130 als Barrierenmaske 135 ausgebildet ist. Auch die Barrierenmaske 135 dient dazu, Bildinformationen 140.1, welche für das linke Auge 2 bestimmt sind, zu blockieren, sodass diese nicht auf das rechte Auge 3 treffen, und Bildinformationen 140.2, welche für das rechte Auge 3 bestimmt sind, zu blockieren, sodass diese nicht auf das linke Auge 2 treffen. Im Gegensatz zum Linsenarray 131, bei dem die Lichtstrahlen 133 durch Brechung abgelenkt werden, blockiert die Barrierenmaske 135 durch die geometrische Anordnung der Masken die Lichtstrahlen 133 durch Absorption.

Die Figur 9 veranschaulicht das erfindungsgemäße Verfahren zum Betreiben eines Haushaltsgerätes 100, insbesondere eine Küchenmaschine 100 zum Zubereiten von Speisen, wobei die Erfassung 300 einer Positionsinformation 200 eines Benutzers 1 durch eine Positionsvorrichtung 120, sowie die Wiedergabe 400 einer Bildinformation 140 durch eine Anzeige 130, welche dazu ausgebildet ist, beim Benutzer 1 einen Tiefeneindruck zu erzeugen, dargestellt ist. Dabei ist die Bildinformation 140 abhängig von zumindest der Positionsinformation 200. Darüber hinaus zeigt die Figur 9 noch die Wiedergabe 500 einer Bildinformation 141, welche für den Betrieb des Haushaltsgerätes spezifisch ist, durch eine Anzeige 130, wobei zusätzlich zu der spezifischen Bildinformation 141 eine vorherige Bildinformation 144 und/oder eine nachfolgende Bildinformation 143 dargestellt sind, wobei insbesondere sich zumindest zwei der Bildinformationen 141, 143, 144 in einer Darstellungstiefe für den Benutzer 1 unterscheiden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, dessen Umfang durch die nachstehenden Ansprüche definiert wird.

### Bezugszeichenliste

- 1: Benutzer
- 2: linkes Auge
- 3: rechtes Auge
- 4: Identifikationsgeber

- 100: Haushaltsgerät, insbesondere Küchenmaschine
- 101: Hauptkörper
- 102: Steuereinheit

- 110: Bearbeitungsvorrichtung
- 111: Rührgefäß

- 120: Positionsvorrichtung
- 121: Eingabeeinheit, insbesondere Drehknopf
- 122: Kamera
- 123: Gestensensor
- 124: Schallwandler

- 130: Anzeige, insbesondere 3D-Display
- 131: optische Einheit, insbesondere Linsenarray
- 132: Leuchteinheit
- 133: Lichtstrahlen
- 134: Gehäuse der Anzeige
- 135: Barrierenmaske (engl. barrier-mask)
- 136: weitere Anzeige

- 140: Bildinformation
- 140.1: Bildinformation des linken Auges
- 140.2: Bildinformation des rechten Auges
- 141: Bildinformation, insbesondere spezifisch für das Haushaltsgerät
- 143: Bildinformationen, insbesondere Ablaufinformationen
- 144: Bildinformationen, insbesondere Ablaufinformationen
- 146: 3D-Objekt
- 147: 3D-Benutzerobjekt

- 150: Benutzerkennungsvorrichtung

- 200: Positionsinformation
- 300: Erfassung
- 400, 500: Wiedergabe

- R: Abstand, insbesondere des Benutzers, zur Anzeige
- Z: Höhe, insbesondere des Benutzers,
- φ: Azimutwinkel
- θ: Polarwinkel

## Patentansprüche

1. Haushaltsgerät (100), insbesondere eine Küchenmaschine (100) zum Zubereiten von Speisen, aufweisend:
- eine Bearbeitungsvorrichtung (110) zum zumindest teilweise automatischen Ausführen einer Haushaltstätigkeit, insbesondere zu einem Verarbeiten von Zutaten, wobei die Bearbeitungsvorrichtung (110) durch eine Steuereinheit (102) gesteuert wird,
- eine Positionsvorrichtung (120) zur Erfassung einer Positionsinformation (200) eines Benutzers (1), der das Haushaltsgerät (100) bedient, wobei die Positionsinformation (200) an die Steuereinheit (102) übermittelt wird,
- **gekennzeichnet durch** eine Anzeige (130), welche dazu ausgebildet ist, eine **durch** die Steuereinheit (102) bestimmte Bildinformation (140) wiederzugeben, wobei durch die Anzeige (130) dem Benutzer (1) einen Tiefeneindruck erweckende Bildinformation (140) angezeigt wird, sodass der Benutzer (1) einen räumlichen Eindruck der dargestellten Informationen erhält und die wiedergegebene Bildinformation (140) abhängig ist von zumindest der Positionsinformation (200) des Benutzers (1).

2. Haushaltsgerät (100) nach Anspruch 1,
**dadurch gekennzeichnet,**
**dass** die Anzeige (130) ein autostereoskopisches Display (130) und/oder eine Virtual-Reality-Brille (130) und/oder ein holographisches Display (130) aufweist.

3. Haushaltsgerät (100) nach Anspruch 1 oder 2,
**dadurch gekennzeichnet,**
**dass** die Anzeige (130) zumindest eine der folgenden Komponenten aufweist: eine optische Komponente (131), insbesondere ein Linsenarray (131), eine Barrierenmaske (135), oder eine Leuchteinheit (132).

4. Haushaltsgerät (100) nach einem der vorhergehenden Ansprüche,
**dadurch gekennzeichnet,**
**dass** die durch die Anzeige (130) wiedergegebene Bildinformation (140) an einer definierten Bildposition in Relation zur Anzeige (130) beim Benutzer (1) einen Tiefeneindruck erzeugt, wobei die definierte Bildposition der Positionsinformation (200) des Benutzers (1) entspricht und insbesondere der definierten Bildposition angepasst werden kann, wenn ein Benutzer (1) sich in Relation zur Anzeige (130) bewegt.

5. Haushaltsgerät (100) nach einem der vorhergehenden Ansprüche,
**dadurch gekennzeichnet,**
**dass** die Positionsvorrichtung (120) zur Erfassung jeweils einer Positionsinformation (200) bei mehreren Benutzern (1) geeignet ist, und/oder
**dass** die Anzeige (130) dazu geeignet ist, mehrere Bildinformationen (140) wiederzugeben, die bei mehreren Benutzern (1) jeweils einen Tiefeneindruck erzeugen.

6. Haushaltsgerät (100) nach einem der vorhergehenden Ansprüche,
**dadurch gekennzeichnet,**
**dass** die Anzeige (130) einen 2D-Modus und einen 3D-Modus aufweist, wobei insbesondere die Anzeige (130) auf Basis der Positionsinformation (200) zwischen dem 2D-Modus und einen 3D-Modus wechselt.

7. Haushaltsgerät (100) nach einem der vorhergehenden Ansprüche, **dadurch gekennzeichnet,**
**dass** ferner eine Benutzerkennungsvorrichtung (150) vorgesehen ist, welche dazu ausgebildet ist, den Benutzer (1) zu identifizieren, wobei die Benutzerkennungsvorrichtung (150) insbesondere dazu ausgebildet ist, mit einem mobilen Identifikationsgeber (4) des Benutzers (1) zu kommunizieren, und/oder
**dass** ferner eine Benutzerkennungsvorrichtung (150) vorgesehen ist, welche dazu ausgebildet ist, den Benutzer (1) aktiv und oder passiv zu identifizieren, wobei insbesondere die durch die Anzeige (130) wiedergegebene Bildinformation (140) für den identifizierten Benutzer (1) spezifisch ist.

8. Haushaltsgerät (100) nach einem der vorhergehenden Ansprüche,
**dadurch gekennzeichnet,**
**dass** die Anzeige (130), insbesondere an einem Gehäuse (134) der Anzeige (130) zumindest eine Drehachse, insbesondere zwei Drehachsen, aufweist, um die die Anzeige (130), insbesondere basierend auf der Positionsinformation (200), in Relation zum Benutzer (1) gedreht werden kann.

9. Haushaltsgerät (100) nach einem der vorhergehenden Ansprüche,
**dadurch gekennzeichnet,**
**dass** eine weitere Anzeige (136) vorgesehen ist, welche insbesondere als 2D-Display (136) ausgebildet ist.

10. Haushaltsgerät (100) nach einem der vorhergehenden Ansprüche,
**dadurch gekennzeichnet,**
**dass** die Positionsvorrichtung (120) zumindest eines der folgenden Bauteile umfasst:
- eine manuell bedienbare Eingabeeinheit (121), insbesondere einen Drehknopf, die insbesondere dazu ausgebildet ist, zumindest die Bearbeitungsvorrichtung (110) durch eine Eingabe des Benutzers (1) zu steuern,
- eine Kamera (122), die insbesondere dazu ausgebildet ist, den Benutzer (1) zu erfassen,
- einen Gestensensor (123), welcher dazu ausgebildet ist, eine Geste des Benutzers (1) zur Steuerung des Haushaltsgerätes (100) zu erfassen, oder
- einen Schallwandler (124), welcher dazu ausgebildet ist, eine Spracheingabe des Benutzers (1) zur Steuerung des Haushaltsgerätes (100) zu erfassen, wobei der Schallwandler (124) insbesondere als ein Mikrofon (124) ausgebildet ist.

11. Haushaltsgerät (100) nach Anspruch 10,
**dadurch gekennzeichnet,**
**dass** der Gestensensor (123) zumindest eines der folgenden Bauteile aufweist:
- eine Kamera,
- einen Radarsensor,
- einen Lidarsensor,
- einen kapazitiven Sensor oder
- einen Ultraschallsensor.

12. Haushaltsgerät (100) nach einem der vorhergehenden Ansprüche,
**dadurch gekennzeichnet,**
**dass** das Haushaltsgerät (100) mehrteilig ausgebildet ist und zumindest einen Hauptkörper (101) aufweist, welcher an eine Netzstromversorgung anschließbar ist und/oder an dem die Bearbeitungsvorrichtung (110) vorgesehen ist, wobei insbesondere die Anzeige (130) lösbar an dem Hauptkörper (101) befestigt ist oder die Anzeige (130) integral mit dem Hauptkörper (101) verbunden ist.

13. Verfahren zum Betreiben eines Haushaltsgeräts (100), insbesondere Küchenmaschine (100) zum Zubereiten von Speisen, aufweisend die folgenden Schritte:
- Erfassung (300) einer Positionsinformation (200) eines Benutzers (1) durch eine Positionsvorrichtung (120),
- **gekennzeichnet durch** die Wiedergabe (400) einer Bildinformation (140) **durch** eine Anzeige (130), welche dazu ausgebildet ist, beim Benutzer (1) einen Tiefeneindruck zu erzeugen, wobei die Bildinformation (140) abhängig ist von zumindest der Positionsinformation (200).

14. Verfahren zum Betreiben eines Haushaltsgeräts (100) nach einem der Anspruche 13,
**dadurch gekennzeichnet,**
**dass** das Verfahren ferner zumindest einen der folgenden Schritte aufweist:
- Wiedergabe (500) einer Bildinformation (141), welche für den Betrieb des Haushaltsgerätes spezifisch ist, durch eine Anzeige (130), wobei zusätzlich zu der Bildinformation (141) eine vorherige Bildinformation (144) und/oder eine nachfolgende Bildinformation (143) dargestellt sind, wobei insbesondere sich zumindest zwei der Bildinformationen (141, 143, 144) in einer Darstellungstiefe für den Benutzer (1) unterscheiden,
- Initiale Erkennung eines Benutzers (1) durch eine Benutzerkennung (150), wobei insbesondere im Falle eines Fehlschlags bei der Erkennung die Anzeige (130) in einen 2D-Modus geschaltet wird,
- Erfassung einer Geste des Benutzers (1) durch einen Gestensensor (123) zur Steuerung des Haushaltsgeräts (100), und/oder Erfassung einer Spracheingabe des Benutzers (1) zur Steuerung des Haushaltsgeräts (100) durch einen Schallwandler (124),
- Ausführen einer Haushaltstätigkeit, insbesondere das zumindest teilweise automatische Zubereiten von Speisen, insbesondere gesteuert durch die Steuereinheit (102), insbesondere entsprechend der zumindest einer erfassten Geste des Benutzers (1).

15. Verfahren zum Betreiben eines Haushaltsgeräts (100) nach einem der Ansprüche 13 oder 14,
**dadurch gekennzeichnet,**
**dass** das Haushaltsgerät (100) nach einem der Ansprüche 1 bis 12 ausgebildet ist.

## Claims

1. Domestic appliance (100), in particular a food processor (100) for preparing food, comprising:
- a processing device (110) for at least partially automatically carrying out a household activity, in particular for processing ingredients, wherein the processing device (110) is controlled by a control unit (102),
- a position device (120) for detecting position information (200) of a user (1) operating the domestic appliance (100), wherein the position information (200) is transmitted to the control unit (102),
**characterized by**
- a display (130) which is designed to display image information (140) determined by the control unit (102), wherein
image information (140) creating an impression of depth is displayed to the user (1) by the display (130), so that the user (1) receives a spatial impression of the displayed information and the displayed image information (140) is dependent on at least the position information (200) of the user (1).

2. Domestic appliance (100) according to claim 1,
**characterized in that**
the display (130) has an autostereoscopic display (130) and/or virtual reality glasses (130) and/or a holographic display (130).

3. Domestic appliance (100) according to claim 1 or 2,
**characterized in that**
the display (130) has at least one of the following components: an optical component (131), in particular a lens array (131), a barrier mask (135), or a light unit (132).

4. Domestic appliance (100) according to any one of the preceding claims,
**characterized in that**
the image information (140) reproduced by the display (130) at a defined image position in relation to the display (130) produces an impression of depth in the user (1), wherein the defined image position corresponds to the position information (200) of the user (1) and in particular can be adapted to the defined image position when a user (1) moves in relation to the display (130).

5. Domestic appliance (100) according to any one of the preceding claims,
**characterized in that**
the position device (120) is suitable for detecting position information (200) for a plurality of users (1) in each case, and/or
**in that** the display (130) is suitable for reproducing a plurality of image information items (140), each of which produces an impression of depth for a plurality of users (1).

6. Domestic appliance (100) according to any one of the preceding claims,
**characterized in that**
the display (130) has a 2D mode and a 3D mode, in particular the display (130) switching between the 2D mode and a 3D mode on the basis of the position information (200).

7. Domestic appliance (100) according to any one of the preceding claims,
**characterized in that**
a user recognition device (150) is also provided, which is designed to identify the user (1), the user recognition device (150) being designed in particular to communicate with a mobile identification transmitter (4) of the user (1), and/or
**in that** a user recognition device (150) is also provided, which is designed to actively and or passively identify the user (1), in particular the image information (140) reproduced by the display (130) being specific to the identified user (1).

8. Domestic appliance (100) according to any one of the preceding claims,
**characterized in that**
the display (130), in particular on a housing (134) of the display (130), has at least one axis of rotation, in particular two axes of rotation, about which the display (130) can be rotated in relation to the user (1), in particular based on the position information (200).

9. Domestic appliance (100) according to any one of the preceding claims,
**characterized in that**
a further display (136) is provided, which is designed in particular as a 2D display (136).

10. Domestic appliance (100) according to any one of the preceding claims,
**characterized in that**
the position device (120) comprises at least one of the following components:
- a manually operable input unit (121), in particular a rotary knob, which is designed in particular to control at least the processing device (110) by an input from the user (1),
- a camera (122), which is designed in particular to capture the user (1),
- a gesture sensor (123), which is designed to detect a gesture of the user (1) for controlling the domestic appliance (100), or
- a sound transducer (124) which is designed to detect a voice input from the user (1) for controlling the domestic appliance (100), the sound transducer (124) being designed in particular as a microphone (124).

11. Domestic appliance (100) according to claim 10,
**characterized in that**
the gesture sensor (123) comprises at least one of the following components:
- a camera,
- a radar sensor,
- a lidar sensor,
- a capacitive sensor or
- an ultrasonic sensor.

12. Domestic appliance (100) according to any one of the preceding claims,
**characterized in that**
the domestic appliance (100) is constructed in several parts and has at least one main body (101) which can be connected to a mains power supply and/or to which the processing device (110) is provided, in particular the display (130) being detachably fastened to the main body (101) or the display (130) being integrally connected to the main body (101).

13. A method of operating a domestic appliance (100), in particular a food processor (100) for preparing food, comprising the following steps:
- detection (300) of position information (200) of a user (1) by a position device (120),
**characterized by** the
- reproduction (400) of image information (140) by a display (130) which is designed to create an impression of depth in the user (1), wherein
the image information (140) is dependent on at least the position information (200).

14. A method of operating a domestic appliance (100) according to any one of claims 13,
**characterized in that**
the method further comprises at least one of the following steps:
- display (500) of image information (141), which is specific to the operation of the domestic appliance, by means of a display (130), wherein, in addition to the image information (141), previous image information (144) and/or subsequent image information (143) are displayed, wherein, in particular, at least two of the image information (141, 143, 144) differ in a display depth for the user (1),
- initial recognition of a user (1) by a recognition device (150), wherein the display (130) is switched to a 2D mode, in particular in the event of a recognition failure,
- detection of a gesture of the user (1) by a gesture sensor (123) for controlling the domestic appliance (100), and/or detection of a voice input of the user (1) for controlling the domestic appliance (100) by a sound transducer (124),
- performing a household activity, in particular the at least partially automatic preparation of food, in particular controlled by the control unit (102), in particular in accordance with at least one detected gesture of the user (1).

15. A method of operating a domestic appliance (100) according to any one of claims 13 or 14,
**characterized in that**
the domestic appliance (100) is designed according to one of claims 1 to 12.

## Revendications

1. Appareil ménager (100), en particulier un robot ménager (100) pour la préparation d'aliments, comprenant :
- un dispositif de traitement (110) pour l'exécution au moins partiellement automatique d'une activité ménagère, en particulier pour un traitement d'ingrédients, le dispositif de traitement (110) étant commandé par une unité de commande (102),
- un dispositif de position (120) pour détecter une information de position (200) d'un utilisateur (1) qui utilise l'appareil ménager (100), l'information de position (200) étant transmise à l'unité de commande (102),
**caractérisé par**
- un affichage (130) qui est conçu pour reproduire une information d'image (140) déterminée par l'unité de commande (102), dans lequel
des informations d'image (140) donnant une impression de profondeur sont affichées à l'utilisateur (1) par l'affichage (130), de sorte que l'utilisateur (1) obtient une impression spatiale des informations représentées et que les informations d'image (140) reproduites dépendent au moins des informations de position (200) de l'utilisateur (1).

2. Appareil ménager (100) selon la revendication 1,
**caractérisé en ce que**
l'affichage (130) présente un écran autostéréoscopique (130) et/ou des lunettes de réalité virtuelle (130) et/ou un écran holographique (130).

3. Appareil ménager (100) selon la revendication 1 ou 2,
**caractérisé en ce que**
l'affichage (130) présente au moins l'un des composants suivants : un composant optique (131), en particulier un réseau de lentilles (131), un masque à barrière (135), ou une unité d'éclairage (132).

4. Appareil ménager (100) selon l'une quelconque des revendications précédentes,
**caractérisé en ce que**
l'information d'image (140) reproduite par l'affichage (130) à une position d'image définie par rapport à l'affichage (130) produit chez l'utilisateur (1) une impression de profondeur, la position d'image définie correspondant à l'information de position (200) de l'utilisateur (1) et pouvant notamment être adaptée à la position d'image définie lorsqu'un utilisateur (1) se déplace par rapport à l'affichage (130).

5. Appareil ménager (100) selon l'une quelconque des revendications précédentes,
**caractérisé en ce que**
le dispositif de position (120) est adapté à la saisie d'une information de position (200) respective auprès de plusieurs utilisateurs (1), et/ou
**en ce que** l'affichage (130) est adapté pour reproduire plusieurs informations d'image (140) qui produisent chacune une impression de profondeur chez plusieurs utilisateurs (1).

6. Appareil ménager (100) selon l'une quelconque des revendications précédentes,
**caractérisé en ce que**
l'affichage (130) présente un mode 2D et un mode 3D, l'affichage (130) commutant en particulier entre le mode 2D et un mode 3D sur la base de l'information de position (200).

7. Appareil ménager (100) selon l'une quelconque des revendications précédentes,
**caractérisé en ce qu'**
il est prévu en outre un dispositif de reconnaissance d'utilisateur (150) qui est conçu pour identifier l'utilisateur (1), le dispositif de reconnaissance d'utilisateur (150) étant conçu en particulier pour communiquer avec un émetteur d'identification mobile (4) de l'utilisateur (1), et/ou
**en ce qu'**il est prévu en outre un dispositif de reconnaissance d'utilisateur (150) qui est conçu pour identifier activement et/ou passivement l'utilisateur (1), l'information d'image (140) reproduite par l'affichage (130) étant en particulier spécifique à l'utilisateur identifié (1).

8. Appareil ménager (100) selon l'une quelconque des revendications précédentes,
**caractérisé en ce que**
l'affichage (130), en particulier sur un boîtier (134) de l'affichage (130), présente au moins un axe de rotation, en particulier deux axes de rotation, autour desquels l'affichage (130) peut être tourné par rapport à l'utilisateur (1), en particulier sur la base de l'information de position (200).

9. Appareil ménager (100) selon l'une quelconque des revendications précédentes,
**caractérisé en ce qu'**
il est prévu un autre affichage (136), qui est réalisé en particulier sous la forme d'un affichage 2D (136).

10. Appareil ménager (100) selon l'une quelconque des revendications précédentes,
**caractérisé en ce que**
le dispositif de position (120) comprend au moins l'un des éléments suivants :
- une unité d'entrée (121) pouvant être actionnée manuellement, en particulier un bouton rotatif, qui est conçue en particulier pour commander au moins le dispositif de traitement (110) par une entrée de l'utilisateur (1),
- une caméra (122), qui est notamment conçue pour détecter l'utilisateur (1),
- un capteur de gestes (123) qui est conçu pour détecter un geste de l'utilisateur (1) pour commander l'appareil ménager (100), ou
- un transducteur acoustique (124) qui est conçu pour détecter une entrée vocale de l'utilisateur (1) pour commander l'appareil ménager (100), le transducteur acoustique (124) étant conçu en particulier comme un microphone (124).

11. Appareil ménager (100) selon la revendication 10,
**caractérisé en ce que**
le capteur de gestes (123) présente au moins l'un des composants suivants :
- une caméra,
- un capteur radar,
- un capteur lidar,
- un capteur capacitif ou
- un capteur à ultrasons.

12. Appareil ménager (100) selon l'une quelconque des revendications précédentes,
**caractérisé en ce que**
l'appareil ménager (100) est réalisé en plusieurs parties et présente au moins un corps principal (101) qui peut être raccordé à une alimentation en courant de réseau et/ou sur lequel est prévu le dispositif de traitement (110), l'affichage (130) étant notamment fixé de manière amovible sur le corps principal (101) ou l'affichage (130) étant relié intégralement au corps principal (101).

13. Procédé de fonctionnement d'un appareil ménager (100), en particulier d'un robot ménager (100) pour la préparation d'aliments, comprenant les étapes suivantes :
- détection (300) d'une information de position (200) d'un utilisateur (1) par un dispositif de position (120),
**caractérisé par** la
- reproduction (400) d'une information d'image (140) par un affichage (130) qui est conçu pour produire une impression de profondeur chez l'utilisateur (1), dans laquelle
l'information d'image (140) dépend au moins de l'information de position (200).

14. Procédé de fonctionnement d'un appareil ménager (100) selon l'une des revendications 13,
**caractérisé en ce que**
le procédé comprend en outre au moins une des étapes suivantes :
- reproduction (500) d'une information d'image (141), qui est spécifique au fonctionnement de l'appareil ménager, par un affichage (130), une information d'image précédente (144) et/ou une information d'image suivante (143) étant représentées en plus de l'information d'image (141), au moins deux des informations d'image (141, 143, 144) se distinguant notamment par une profondeur de représentation pour l'utilisateur (1),
- reconnaissance initiale d'un utilisateur (1) par un dispositif de reconnaissance d'utilisateur (150), dans lequel, en particulier en cas d'échec de la reconnaissance, l'affichage (130) est commuté dans un mode 2D,
- détection d'un geste de l'utilisateur (1) par un capteur de geste (123) pour commander l'appareil ménager (100), et/ou détection d'une entrée vocale de l'utilisateur (1) pour commander l'appareil ménager (100) par un transducteur acoustique (124),
- l'exécution d'une activité ménagère, en particulier la préparation au moins partiellement automatique de plats, en particulier commandée par l'unité de commande (102), en particulier en fonction du au moins un geste détecté de l'utilisateur (1).

15. Procédé de fonctionnement d'un appareil électroménager (100) selon l'une des revendications 13 ou 14,
**caractérisé en ce que**
l'appareil ménager (100) est réalisé selon l'une des revendications 1 à 12.
